# EUROPÄISCHE PATENTSCHRIFT

(11) **EP 2 454 175 B1**
(45) Veröffentlichungstag und Bekanntmachung des Hinweises auf die Patenterteilung: **01.10.2014**
(21) Anmeldenummer: 10732299.2
(22) Anmeldetag: 07.07.2010
(51) Int. Cl.: B65G 1/04

(54) **HYBRIDLAGER**
HYBRID WAREHOUSE
SYSTÈME DE STOCKAGE HYBRIDE

(30) Priorität: 13.07.2009 DE 102009033169
(43) Veröffentlichungstag der Anmeldung: 23.05.2012
(73) Patentinhaber: Kardex Produktion Deutschland GmbH, 86476 Neuburg/Kammel (DE)
(72) Erfinder: FRIEDMANN, Jürgen, 76776 Neuburg am Rhein (DE); GEHRLEIN, Ludwig, 76771 Hördt (DE)
(74) Vertreter: Grünecker, Kinkeldey, Stockmair & Schwanhäusser
(86) Internationale Anmeldenummer: PCT/EP2010/004094
(87) Internationale Veröffentlichungsnummer: WO 2011/006601

(56) Entgegenhaltungen:
- WO-A1-2006/010550
- WO-A1-2007/098797
- DE-A1-102007 040 863
- DE-U1-202006 001 158
- GB-A- 2 143 500
- JP-A- 2002 356 205

## Beschreibung

Die Erfindung betrifft ein Lager, insbesondere Kommissionslager mit Lagerplätzen, für Lagergüter aufnehmende Lagergutträger, mit einem Schnelllager zur bedarfsgerechten schnellen Abholung des Lagergutes, wobei das Schnelllager wenigstens einen ersten Förderbereich umfasst, der an wenigstens einer Seite von Schnelllagerplätzen begrenzt ist und in dem eine erste automatische Fördervorrichtung mit einer durchschnittlichen Schnellzugriffszeit auf die Schnelllagerplätze beweglich angeordnet ist, und mit einem Langsamlager, das wenigstens einen zweiten Förderbereich umfasst, der an wenigstens einer Seite von Langsamlagerplätzen begrenzt ist und in dem eine zweite automatische Fördervorrichtung mit einer durchschnittlichen Langsamzugriffszeit auf die Langsamlagerplätze beweglich angeordnet ist, wobei wenigstens ein Hybridlagerplatz sowohl Schnelllagerplatz als auch Langsamlagerplatz ist, und wobei eine durchschnittliche Langsamzugriffszeit größer als die durchschnittliche Schnellzugriffszeit ist.

Des Weiteren betrifft die Erfindung ein Verfahren zur Lagerführung eines Lagers, insbesondere eines Kommissionslagers mit Lagerplätzen für auf Lagergutträgern angeordnetes Lagergut.

Lager und Verfahren zu deren Führung der vorbenannten Art sind bekannt. In den Lagern sind meist eine Vielzahl von Lagerplätzen über- und nebeneinander angeordnet, auf denen Lagergüter entweder direkt oder mit Hilfe sie tragender Lagergutträger eingelagert werden. Beim Einlagern werden die Lagergüter bzw. Lagergutträger beispielsweise von einer Bedienperson in einer Beschickungs- und/oder Entnahmestation positioniert, um von dort von den Fördervorrichtungen aufgenommen und zu einem Lagerplatz gebracht zu werden. Wenn der eingelagerte Lagergutträger oder das Lagergut von einem Benutzer angeordert wird, wird er oder es von der Fördervorrichtung von seinem Lagerplatz zur Beschickungs- und/oder Entnahmestation transportiert und dort aus dem Lager entnommen.

Wenn das Lager ein Kommissionierlager ist, wird es zum Zusammenstellen von Teilmengen (Artikeln) aus einer Gesamtmenge verfügbarer Artikel (Sortiment) anhand eines Lieferauftrages verwendet. Dabei werden die Artikel meist in sogenannten Großgebinden zu Bereitstellungs- bzw. Kommissionierplätzen befördert, bei denen es sich um Beschickungs- und/oder Entnahmestationen handeln kann, wo die auftragsgemäß angeforderte Teilmenge dem Großgebinde entnommen wird. Danach wird das Großgebinde mit den restlichen Artikeln zurück zu seinem Lagerplatz befördert. Systeme dieser Art werden in vielfältigen Ausgestaltungsformen genutzt und müssen mit dem Nachteil leben, dass die in ihnen verwendeten Fördervorrichtungen zur Bereitstellung von Artikeln und deren Abholung von den Bereitstellungsplätzen jeweils den kompletten Weg zwischen ihrem Lagerplatz und dem Bereitstellungsplatz zurücklegen müssen.

So ist beispielsweise in der WO 2004/039700 A1 ein Lagersystem zum Bereitstellen von Lagereinheiten (Paletten) beschrieben. Hier befinden sich in zwischen Lagerregalen gebildeten gassenartigen Förderbereichen flurfrei, also hängend arbeitende Fördervorrichtungen, welche obere Bereiche der Regale bedienen, und Transportwagen, welche die Paletten zwischen den unteren Regalplätzen und einer Bereitstell- bzw. Kommissionierungsstation außerhalb des Lagerbereiches hin- und herbefördem. Zur zeit- und wegoptimierten Bereitstellung werden häufig angeforderte sogenannte A-Artikel in den direkt von den Transportwagen erreichbaren unteren Lagerplätzen der Regale abgelegt. Darüber werden die weniger häufig angeforderten sogenannten B-Artikel und über diesen die selten angeforderten sogenannten C-Artikel gelagert.

Nachteilig bei dem System der WO 2004/039700 A1 ist, dass auf die Lagerplätze eines Lagerregals nur mit einer Fördervorrichtung zugreifbar ist und sich gleichzeitig in einem Förderbereich befindliche Fördervorrichtungen und Transportwagen behindern. Dies führt zu Verzögerungen bei der Bereitstellung von Lagergütern.

Des Weiteren ist das aus der WO 2004/039700 A1 bekannte System insbesondere bei einer Kommissionierung von Lagergütern nachteilig, weil diese zum Kommissionieren zu den Bereitstell- bzw. Kommissionierungsstationen außerhalb des Lagerbereiches und nach dem Kommissionieren wieder zurück in das Lager befördert werden müssen. Somit ist die Zugriffszeit auf bereits kommissionierte Paletten durch die Zugriffszeit der Transportwagen auf die Lagerplätze vorgegeben, wobei sich wiederum die Transportwagen gegenseitig behindern können, wenn eine Vielzahl von Paletten bzw. Artikeln aus einem Förderbereich bereitgestellt werden soll.

Die WO 2006/010550 A1 der Anmelderin beschreibt ein Lager mit kaskadierten Lagerüften, die über zwischen sich liegenden Lagerplätze Lagergüter austauschen, wobei einer der Lagerlifte mit einer Beschickungs- und/oder Entnahmestation versehen ist, und entspricht dem Oberbegriff des Anspruchs 1.

Der Erfindung liegt folglich die Aufgabe zugrunde, das eingangs genannte Lager und Verfahren zur Lagerführung eines Lagers in ihrer Geschwindigkeit zu optimieren, also Zugriffszeiten auf die Lagerplätze zu verkürzen und Lagergüter schneller bereit zu stellen.

In dem erfindungsgemäßen Lager wird diese Aufgabe dadurch gelöst, dass das Schnelllager und das Langsamlager jeweils mit wenigstens einer an wenigstens einen Lagerplatz angrenzenden und/oder in diesen integrierten Beschickungs- und/oder Entnahmestation versehen sind, über die das Lager mit Lagergutträgern beschickt oder über die das Lagergut aus dem Lager entnommen werden kann.

Im eingangs genannten Verfahren wird die Aufgabe dadurch gelöst, dass das Lagergut an einer an wenigstens einen Lagerplatz angrenzenden und/oder in diesen integrierten Beschickungs- und/oder Entnahmestation eines Langsamlagers auf Langsamlagerplätzen des Langsamlagers eingelagert wird, wobei das Lagergut durch eine erste Fördervorrichtung von wenigstens einem der Langsamlagerplätze automatisch entnommen, auf einen Hybridlagerplatz, der sowohl Schnelllagerplat 2 als auch Langsamlagerplatz ist, überführt und an einer an wenigstens einen Lagerplatz angrenzenden und/oder in diesen integrierten Beschickungs- und/oder Entnahmestation des Schnelllagers entnommen wird, und wobei das Schnelllager zur bedarfsgerechten schnellen Abholung des Lagergutes mit einer größeren Umschlagsgeschwindigkeit als das Langsamlager betrieben wird.

Diese Lösungen haben den Vorteil, dass das Schnelllager besonders häufig angefragte A-Artikel oder fertig zusammengestellte Kommissionen besonders schnell bereitstellen kann. So Somit kann das Schnelllager als eine Art Puffer oder Zwischenlager dienen, aus dem Lagergüter bei einer geringen Zugriffszeit abgerufen werden können.

Der wenigstens eine Hybridlagerplatz dient z. B. einer Überführung der Lagergüter aus einem Langsamlager- in einen Schnelllagerbereich. Auf dem Hybridlagerplatz können von der ersten automatischen Fördervorrichtung Lagergüter bedarfsgerecht zur schnellen Abholung durch die zweite Fördervorrichtung bereitgestellt werden. Die zweite automatische Fördervorrichtung kann innerhalb des Langsamlagers ständig und unabhängig von unmittelbaren Anfragen nach Lagergütern diese auf den Langsamlagerplätzen und dem Hybridlagerplatz sortieren und dabei unter voller Auslastung ohne Behinderungen durch die erste Fördervorrichtung arbeiten. Die erste automatische Fördervorrichtung braucht hingegen nur im Bedarfsfall, also bei einer konkreten Anfrage von Lagergütern, tätig zu werden und kann dann ihre gegenüber der durchschnittlichen Langsamzugriffszeit der zweiten automatischen Fördervorrichtung schnellere durchschnittliche Schnellzugriffszeit, mit anderen Worten die größere Umschlagsgeschwindigkeit des Schnelllagers, voll ausnutzen.

Die Fördervorrichtungen können Lagergüter einfach von der Beschickungs- und/oder Entnahmestation aufnehmen und in das Lager überführen oder auslagern. Einzulagernde Lagergüter können in der Beschickungs- und/oder Entnahmestation abgelegt und von dort von einer Fördervorrichtung abgeholt werden, sobald diese verfügbar ist. Zum Auslagern kann das Lagergut auf einem Lagerplatz abgelegt werden, der an die Beschickungs- und/oder Entnahmestation angrenzt und/oder in den diese integriert ist. Die den Lagergutträger bzw. das Lagergut dort ablegende Fördervorrichtung kann nach dem Ablegen weitere Tätigkeiten ausführen und braucht nicht abzuwarten, bis der Lagergutträger oder das Lagergut von ihr entnommen wurde.

Die erfindungsgemäße Lösung für das eingangs genannte Lager kann mit den folgenden weiteren jeweils für sich vorteilhaften Ausgestaltungsformen beliebig kombiniert und weiter verbessert werden:

Es kann gemäß einer ersten möglichen vorteilhaften Verbesserung eines erfindungsgemäßen Lagers vorgesehen sein, dass die Anzahl der Langsamlagerplätze größer als die Anzahl der Schnelllagerplätze ist. Folglich können die Mengen und Massen von Lagergut im Langsamlager größer als diejenigen im Schnelllager sein. Das Langsamlager kann demnach als Eingangs- und/oder Zwischenlager fungieren, in dem der größte Teil des gesamten Lagerbestandes liegt. Die Lagergüter können bedarfsgerecht über den wenigstens einen Hybridlagerplatz in den Bereich des Schnelllagers überführt zu werden, das als eine Art Bereitstellungslager zur schnellen Abholung der Lagergüter dient.

Die Lagerkapazitäten können gemäß einer weiteren möglichen Ausgestaltungsform eines erfindungsgemäßen Lagers dadurch erhöht werden, dass wenigstens einer der Förderbereiche als ein an wenigstens zwei sich gegenüberliegenden Seiten von Lagerplätzen begrenzter Förderschacht ausgestaltet ist. Der Förderschacht kann von einer Vielzahl von übereinander und nebeneinander angeordneten Lagerplätzen umgeben sein.

Gemäß einer weiteren vorteilhaften Ausführungsform eines erfindungsgemäßen Lagers kann vorgesehen sein, dass eine Vielzahl von direkt benachbarten Hybridlagerplätzen einen zusammenhängenden Hybridlagerbereich bilden. In den Hybridlagerbereich können von der zweiten automatischen Fördervorrichtung eine Vielzahl von Lagergütern aus dem Langsamlager zur Abholung durch die erste automatische Fördervorrichtung im Schnelllager bereitgestellt werden. Dies erhöht insbesondere den Nutzungsgrad der zweiten automatischen Fördervorrichtung, die ständig damit beschäftigt sein kann, die Vielzahl von direkt benachbarten Hybridlagerplätzen bedarfsgerecht mit Lagergütern zu versehen. Dazu kann die zweite automatische Fördervorrichtung, insbesondere wenn das Langsamlager mehr Langsamlagerplätze aufweist als das Schnelllager Schnelllagerplätze, ständig Lagergüter aus dem Hybridlagerbereich fern liegenden Abschnitten des Lagers in den Hybridlagerbereich überführen. Die erste automatische Fördervorrichtung kann unterdessen die Lagergüter von den Hybridlagerplätzen entnehmen, wobei zwischen diesen im Hybridlagerbereich im Vergleich zum Langsamlager kürzere Wege zurückzulegen sind. Dies verkürzt die Schnellzugriffszeit weiter und ermöglicht eine bessere Ausnutzung der ersten automatischen Fördervorrichtung. Diese kann die Lagergüter entweder aus dem Hybridlagerbereich direkt bereitstellen oder auf einen Schnelllagerplatz überführen, der kein Hybridlagerplatz ist. Somit lässt sich gewährleisten, dass alle zu erwartenden Anforderungen für Lagergüter schnell von der ersten automatischen Fördervorrichtung ausgeführt werden können und deren Stillstandszeiten möglichst gering sind.

Gemäß einer weiteren möglichen vorteilhaften Ausgestaltungsform eines erfindungsgemäßen Lagers kann vorgesehen sein, dass wenigstens eine der automatischen ersten und zweiten Fördervorrichtungen wenigstens eine zur Aufnahme von Lagergutträgern ausgestaltete bewegliche Aufnahmeebene aufweist, die entlang einer Vertikalrichtung und/oder einer Horizontalrichtung des Lagers beweglich ist und eine Vielzahl von nebeneinander angeordneten Lagergutträgeraufnahmen zur Aufnahme jeweils mindestens eines Lagergutträgers umfasst. Die Vielzahl von nebeneinander angeordneten Lagergutträgeraufnahmen ermöglichen es den Fördervorrichtungen, eine Vielzahl gleicher oder verschiedener Lagergüter bzw. Artikel oder Lagergutträger aufzunehmen, was sowohl die durchschnittliche Langsamzugriffszeit als auch die durchschnittliche Schnellzugriffszeit verkürzt. Die Fördervorrichtungen können beispielsweise eine Vielzahl von Lagergütern oder Lagergutträgern aus einer Zugriffsposition auf eine Vielzahl von nebeneinander angeordneten Lagerplätzen zugreifen.

Die zweite automatische Fördervorrichtung kann im Langsamlager unter mehreren Zwischenstopps an Langsamlagerplätzen Kommissionieren, Kommissionen oder nach Bedarf bereitzustellende Artikel aufnehmen und bei nur einem Halt am Hybridlagerbereich alle aufgenommenen Lagergüter auf einer Vielzahl von nebeneinander angeordneten Hybridlagerplätzen gleichzeitig ablegen. Von dieser Vielzahl von nebeneinander angeordneten Hybridlagerplätzen kann die erste automatische Fördervorrichtung die Lagergüter gleichzeitig entnehmen und bei Abruf direkt bereitstellen oder zunächst auf einem Schnelllagerplatz zwischenlagern. Zusammengefasst kann die zweite automatische Fördervorrichtung zum Kommissionieren und die erste automatische Fördervorrichtung zum Bereitstellen fertiger Kommissionen verwendet werden. Dies hilft, die Stillstandszeiten der Fördervorrichtungen zu minimieren, da sie ständig zum Kommissionieren und/oder Bereitstellen eingesetzt werden können.

Gemäß einer weiteren möglichen vorteilhaften Ausgestaltungsform des erfindungsgemäßen Lagers kann vorgesehen sein, dass eine stationäre Transfereinrichtung an wenigstens einen Lagerplatz angrenzt und/oder in diesen integriert ist, die ausgestaltet ist, den wenigstens einen angrenzenden Lagerplatz mit Lagergutträgern zu beschicken und/oder Lagergutträger von diesem zu entnehmen. Die stationäre Transfereinrichtung kann beispielsweise dazu dienen, Lagergutträger in die Beschickungs- und/oder Entnahmestation zu überführen, von dieser zu übernehmen oder Lagergutträger zur Übernahme durch eine Fördervorrichtung auf einem Lagerplatz abzulegen. Des Weiteren kann die Transfereinrichtung Lagergutträger zwischen zwei angrenzenden Lagerplätzen überführen.

Gemäß einer weiteren möglichen vorteilhaften Ausgestaltungsform kann es erfindungsgemäß Lagers kann vorgesehen sein, dass eine Vielzahl von nebeneinander angeordneten Lagerplätzen und/oder eine Vielzahl von Lagergutträgeraufnahmen in der Beschickungs- und/oder Entnahmestation, der Transfereinrichtung und/oder der Fördervorrichtung mit wenigstens einem Übergabeorgan ausgestattet ist bzw. sind, das mindestens ein Übergabeelement aufweist, das ausgestaltet ist, mit wenigstens einem Lagergutträger zusammen zu wirken und diesen zumindest in einer Querrichtung des Lagers zu bewegen. Die jeweiligen Lagergutträgeraufnahmen können dadurch beliebig gleichzeitig oder zu verschiedenen Zeiten Lagergutträger parallel aufnehmen oder abgeben, was die Flexibilität eines erfindungsgemäßen Lagers erhöht und die Zugriffszeiten insgesamt verkürzt. Besonders beim Kommissionieren ist diese Ausgestaltungsform vorteilhaft, weil die einzelnen Kommissionen auf den nebeneinander angeordneten Lagerplätzen oder Lagergutträgeraufnahmen beliebig zusammengestellt und gleichzeitig bei Bedarf abgegeben werden können.

Dazu ist es insbesondere von Vorteil, wenn gemäß einer weiteren vorteilhaften Ausgestaltungsform eines erfindungsgemäßen Lagers vorgesehen ist, dass die Übergabeorgane unabhängig voneinander steuerbar sind. So können beispielsweise alle einer Lagergutträgeraufnahme zugeordneten Übergabeorgane betätigt werden, während die Übergabeorgane einer weiteren Lagergutträgeraufnahme ruhen.

Gemäß einer weiteren möglichen vorteilhaften Ausgestaltungsform eines erfindungsgemäßen Lagers kann vorgesehen sein, dass ein eine Vielzahl von nebeneinander liegenden Lagerplätzen umfassendes Lagerabteil zwischen Vertikalstützen des Lagers angeordnet ist, die über dem Lagerabteil angeordnete Lagerplätze abstützen. So kann insbesondere bei Lagerregalen der horizontale Abstand zwischen den Lagerplätzen verringert und somit die Zugriffszeit auf die Lagerplätze verkürzt werden. In den innerhalb eines Lagerabteils nebeneinander liegenden Lagerplätzen sind von den Fördervorrichtungen geringere Wege zurückzulegen, als bei durch Vertikalstützen voneinander getrennten Lagerplätzen. Gleichzeitig vereinfacht sich die Aufnahme von Lagergutträgern aus einer Vielzahl nebeneinander angeordneter Lagerplätze, weil diese im Lagerabteil nicht durch Vertikalstützen voneinander separiert sind und einfacher auf nebeneinander liegende Lagergutträgeraufnahmen einer Fördervorrichtung oder Transfereinrichtung bewegt oder von diesen abgelegt werden können.

Gemäß einer weiteren möglichen vorteilhaften Ausgestaltungsform eines erfindungsgemäßen Lagers kann vorgesehen sein, dass zumindest abschnittsweise zwischen wenigstens zwei Lagerplätzen eines Lagerabteils mindestens ein entlang der Querrichtung des Lagerregals verlaufendes horizontales Unterteilungselement angeordnet ist, das die wenigstens zwei Lagerplätze in der Horizontalrichtung voneinander abgrenzt und die Lagergutträger in der Querrichtung führt. Das Unterteilungselement vereinfacht ein paralleles bzw. gleichzeitiges Abladen und Aufnehmen von Lagergutträgern von den nebeneinander angeordneten Lagerplätzen, insbesondere wenn die Lagergutträger dabei in der Querrichtung verschoben werden. Das Unterteilungselement sorgt mit anderen Worten für eine verbesserte Führung der Lagergutträger.

Die Führung der Lagergutträger kann gemäß einer weiteren möglichen vorteilhaften Ausgestaltungsform eines erfindungsgemäßen Lagers insbesondere dadurch verbessert werden, dass das mindestens eine Unterteilungselement ein sich in einer Projektion in der Vertikalrichtung mit dem Lagerplatz überlappendes vertikales Begrenzungselement aufweist, das Bewegungen der Lagergutträger in der Vertikalrichtung begrenzt. Somit können die Lagergutträger nicht so einfach kippen oder quer stehen und auf den Lagerplätzen oder einer Transfer- oder Fördervorrichtung verkanten.

Gemäß einer weiteren möglichen vorteilhaften Ausgestaltungsform eines erfindungsgemäßen Lagers kann vorgesehen sein, dass die Anzahl von Lagergutträgeraufnahmen der Beschickungs- und/oder Entnahmestation, der Fördervorrichtung und/oder der Transfervorrichtung gleich der Anzahl der Lagerplätze in einem Lagerabteil ist. Die aufeinander abgestimmte Anzahl der Lagerplätze im Lagerabteil, der Lagergutträgeraufnahmen der Beschickungs- und/oder Entnahmestation, der Fördervorrichtung und/oder der Transfervorrichtung ermöglicht einen effizienten modularen Aufbau des Lagers, bei dem die Abstände zwischen nebeneinander angeordneten Lagerplätzen minimiert sind. Insbesondere bei übereinander angeordneten Lagerabteilen bleibt die Stabilität des Lagers bzw. Lagerregals durch die Lagerabteile horizontal voneinander abgrenzende Vertikalstützen gewährleistet.

Gemäß einer weiteren möglichen vorteilhaften Ausgestaltungsform eines erfindungsgemäßen Lagers kann vorgesehen sein, dass es ein weiteres Langsamlager mit wenigstens einem dritten Förderbereich umfasst, der an wenigstens einer Seite von weiteren Langsamlagerplätzen begrenzt ist und in dem eine dritte automatische Fördervorrichtung mit einer weiteren durchschnittlichen Langsamzugriffszeit auf die weiteren Langsamlagerplätze beweglich angeordnet ist, wobei wenigstens ein weiterer Hybridlagerplatz sowohl weiterer Langsamlagerplatz als auch Langsamlagerplatz ist und die weitere durchschnittliche Langsamzugriffszeit größer als die zweite durchschnittliche Zugriffszeit ist. Durch diese Ausgestaltungsform lässt sich die Lagerkapazität und -flexibilität erhöhen, da das weitere Langsamlager eine Art Eingangslager bilden kann, das sich mit dem Langsamlager überschneidet, welches als eine Art Zwischenlager fungiert, das sich wiederum mit dem Schnelllager überschneidet, welches als Bereitstellungslager genutzt wird, wobei die einzelnen Lagerbereiche jeweils über Hybridlagerplätze miteinander verbunden sein können.

Im Folgenden wird die Erfindung anhand vorteilhafter Ausführungsformen mit Bezug auf die Zeichnungen beispielhaft näher erläutert. Die beschriebenen Ausführungsformen stellen dabei lediglich mögliche Ausgestaltungen dar, bei denen jedoch die einzelnen Merkmale, wie oben beschrieben ist, unabhängig voneinander realisiert und weggelassen werden können.

In der Figurenbeschreibung werden der Einfachheit halber gleiche Merkmale mit gleichen Bezugszeichen versehen, um Wiederholungen zu vermeiden und eine Konsistenz der darin verwendeten Bezugszeichen zu wahren.

Es zeigen:
- Fig. 1: eine schematische Draufsicht auf ein erfindungsgemäßes Lager;
- Fig. 2: eine schematische Perspektivansicht eines erfindungsgemäßen Lagerabschnittes, der insbesondere als ein Schnelllager fungieren kann;
- Fig. 3: eine schematische Perspektivansicht des Lagerabschnittes aus Fig. 2 mit teilweise abgenommenen Abdeckungen;
- Fig. 4: eine schematische Perspektivansicht eines Lagerabschnittes, der als Schnell- oder Langsamlager eingesetzt werden kann;
- Fig. 5: eine schematische Perspektivansicht einer erfindungsgemäßen Fördervorrichtung;
- Fig. 6: eine schematische Perspektivansicht einer erfindungsgemäßen Fördervorrichtung;
- Fig. 7: eine schematische Seitenansicht einer erfindungsgemäßen Fördervorrichtung;
- Fig. 8: eine schematische Vorderansicht eines erfindungsgemäßen Lagerabschnittes, insbesondere eines Langsamlagers, mit teilweise aufgebrochener Außenhülle;
- Fig. 9: eine schematische Innenansicht eines erfindungsgemäßen Lagerabschnittes entlang der Schnittlinie III - III in Fig. 8;
- Fig. 10: eine schematische Innenansicht eines erfindungsgemäßen Lagerabschnittes entlang der Schnittlinie IV - IV in Fig. 8;
- Fig. 11: eine schematische Perspektivansicht eines erfindungsgemäßen Lagergutträgers;
- Fig. 11a: eine vergrößerte Teilansicht der Einzelheit A in Fig. 11 in einer Draufsicht;
- Fig. 11b: eine vergrößerte Teilansicht der Einzelheit B in Fig. 11;
- Fig. 12: eine schematische Vorderansicht erfindungsgemäßer Lagerplätze;
- Fig. 13: eine schematische Perspektivansicht einer weiteren Ausführungsform eines erfindungsgemäßen Lagergutträgers;
- Fig. 14: eine schematische Vorderansicht zweier übereinander angeordneter Lagerabteile mit einer Vielzahl von nebeneinander angeordneten Lagerplätzen, in denen jeweils ein Lagergutträger in der in Fig. 14 gezeigten Ausführungsform aufgenommen ist;
- Fig. 15: eine schematische Draufsicht auf einen erfindungsgemäßen Lagerabschnitt, in dem die einzelnen Lagerplätze durch Vertikalstützen voneinander getrennt sind;
- Fig. 16: eine schematische Draufsicht auf einen erfindungsgemäßen Lagerabschnitt mit in einem Lagerabteil zusammengefassten nebeneinander liegenden Lagerplätzen;
- Fig. 17: eine schematische Draufsicht auf einen erfindungsgemäßen Lagerabschnitt mit zwei Fördervorrichtungen, die eine Vielzahl von nebeneinander angeordneten Lagergutträgeraufnahmen aufweisen und an Lagerplätze angrenzenden Transfervorrichtungen; und
- Fig. 18: eine schematische Draufsicht auf eine weitere Ausführungsform eines erfindungsgemäßen Lagers.

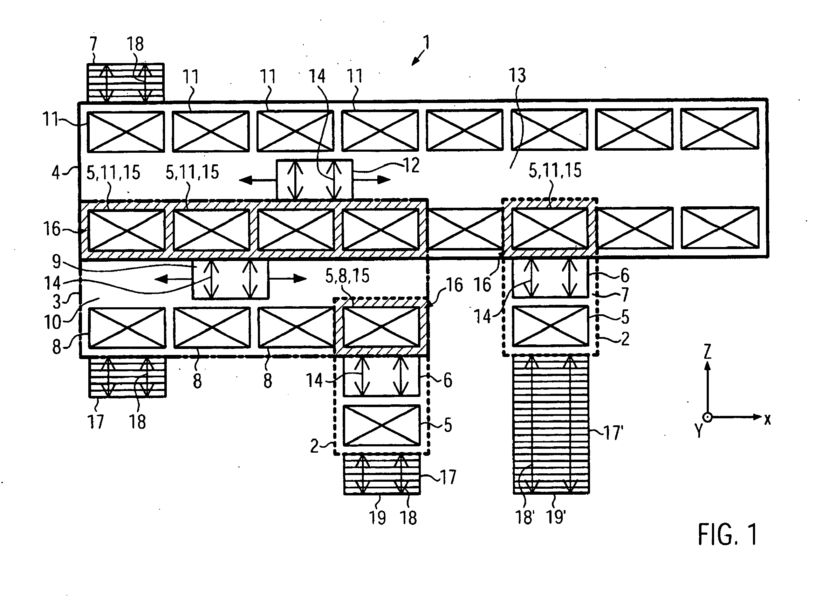

Zunächst wird eine Ausgestaltungsform eines erfindungsgemäßen Lagers 1 anhand Fig. 1 beschrieben, die das Lager 1 in einer perspektivischen Draufsicht zeigt. Zwei Abschnitte des Lagers 1 sind als Schnelllager 2 ausgeführt, die durch eine Punktlinie gekennzeichnet sind. Ein weiterer Abschnitt des Lagers 1 ist als Langsamlager 3 ausgeführt und durch eine ihn umgebende Strichpunktlinie gekennzeichnet. Noch ein weiterer Abschnitt des Lagers ist als weiteres Langsamlager 4 ausgestaltet.

In den Schnelllagern 2 befinden sich zwischen Schnelllagerplätzen 5 erste Fördervorrichtungen 6, welche auf die Schnelllagerplätze 5 mit einer durchschnittlichen Schnellzugriffszeit Tₛ zugreifen können und in einer Vertikalrichtung Y des Lagers 1 in einem ersten Förderbereich 7 beweglich ausgestaltet sind.

In dem Langsamlager 3 befinden sich eine Vielzahl von nebeneinander angeordneten Langsamlagerplätzen 8. Die Langsamlagerplätze 8 sind mit einer zweiten Fördervorrichtung 9 erreichbar, die in einem zweiten Förderbereich 10 mit einer durchschnittlichen Langsamzugriffszeit T_{L} auf die Langsamlagerplätze 8 zugreifen kann. Die zweite Fördervorrichtung ist sowohl in der Vertikalrichtung Y als auch einer quer zur Vertikalrichtung Y verlaufenden Horizontalrichtung X des Lagers beweglich.

In dem weiteren Langsamlager 4 befinden sich eine Vielzahl von nebeneinander angeordneten weiteren Langsamlagerplätzen 11, auf die mit einer dritten Fördervorrichtung 12 zugreifbar ist, die in einem dritten Förderbereich 13 sowohl in der Vertikalrichtung Y als auch der Horizontalrichtung X beweglich ist.

Die Fördervorrichtungen 6, 9, 12 haben jeweils in der Vertikalrichtung Y mindestens eine Aufnahmeebene, die mit wenigstens einer Lagergutträgeraufnahme 14 versehen ist, auf die ein Lagergutträger (hier noch nicht gezeigt) in einer Querrichtung Z des Lagers aufgeschoben oder von welcher der Lagergutträger in der Querrichtung Z heruntergenommen werden kann. Somit kann jede Fördervorrichtung 6, 9, 12 in ihrem jeweiligen Förderbereich 7, 10, 13 die jeweils an sie in der Querrichtung Z angrenzenden Lagerplätze 5, 8, 11 mit Lagergutträgern beschicken oder Lagergutträger von diesen entnehmen.

Die Fördervorrichtungen 6 in den Schnelllagern 2 können sowohl auf die Schnelllagerplätze 5 als auch auf jeweils einen Langsamlagerplatz 8 bzw. weiteren Langsamlagerplatz 11 des Langsamlagers 3 bzw. weiteren Langsamlagers 4 zugreifen, auf die auch die zweite Fördervorrichtung 9 bzw. dritte Fördervorrichtung 12 zugreifen kann. Somit bilden die von den ersten, zweiten und/oder dritten Fördervorrichtungen 6, 9, 12 gleichzeitig erreichbaren Lagerplätze 5, 8, 11 Hybridlagerplätze 15, die durch eine Schraffur gekennzeichnet sind. Von der zweiten Fördervorrichtung 9 und der dritten Fördervorrichtung 12 erreichbare Lagerplätze 8, 11 sind ebenfalls Hybridlagerplätze 15 und bilden einen zusammenhängenden Hybridlagerbereich 16, der durch eine Schraffierung um die Lagerplätze gekennzeichnet ist. Da die von den Schnelllagerplätzen 5 und Langsamlagerplätzen 8 gebildeten Hybridlagerplätze 15 zwischen dem Schnelllager 2 und dem Langsamlager 3 in einer Regalsäule (hier nicht gezeigt) übereinander angeordnete Lagerplätze umfassen, bilden diese ebenfalls Hybridlagerbereiche 16.

Die Schnellzugriffszeit Tₛ der ersten Fördervorrichtung 6 auf die Schnelllagerplätze 5 und Hybridlagerplätze 15 ist kleiner als die durchschnittliche Langsamzugriffszeit T_{L}. Die Langsamzugriffszeit T_{L} ist wiederum kürzer als die weitere Langsamzugriffszeit T_{LL}, mit der die dritte Fördervorrichtung 12 auf die weiteren Langsamlagerplätze 11 und von ihr erreichbaren Hybridlagerplätze 15 zugreift. In diesem Ausführungsbeispiel ist die Anzahl der weiteren Langsamlagerplätze 11 größer als die Anzahl der Langsamlagerplätze 8, deren Anzahl wiederum größer als die der Schnelllagerplätze 5 ist. Folglich nimmt die Zugriffsgeschwindigkeit auf die Lagerplätze 5, 8, 11 vom weiteren Langsamlager 4 über das Langsamlager 3 zum Schnelllager 2 zu. Die Lagerkapazität nimmt wiederum vom weiteren Langsamlager 4 über das Langsamlager 3 bis zum Schnelllager 2 ab.

Ferner sind das Schnelllager 2, das Langsamlager 3 und das weitere Langsamlager 4 jeweils mit Beschickungs- und Entnahmestationen 17 versehen, die an einen der Lagerplätze 5, 8, 11 angrenzen und über die das Lager 1 mit Lagergutträgern (hier noch nicht gezeigt) beschickt werden kann oder über die Lagergut aus dem Lager entnommen werden kann. Dazu sind die Beschickung- und/oder Entnahmestationen 17 beispielsweise mit Transfereinrichtungen 18 versehen, mit deren Hilfe die Lagergutträger in der Querrichtung Z bewegt werden können. Die Transfervorrichtungen 18, 18' können beispielsweise als einfache Rollenbahnen oder aktive Einrichtungen mit motorisch angetriebenen Übergabeorganen (hier noch nicht gezeigt) ausgeführt sein.

Eine Beschickungs- und/oder Entnahmestation 17' ist in der Querrichtung Z länger als die Beschickungs- und/oder Entnahmestationen 17. Somit liegen die von dem Lager 1 abgewandten Enden 19 bzw. 19' der Beschickungs- und/oder Entnahmestationen 17 bzw. 17' in der Querrichtung Z auf gleicher Höhe und sind besser zugänglich. Des Weiteren vereinfacht eine verlängerte Transfervorrichtung 18' die Entnahme und den Zugriff auf Lagergutträger in der Horizontalrichtung X, wenn sich diese auf der Transfervorrichtung 18' befinden.

Beim Betrieb der in Fig. 1 gezeigten Lagervorrichtung werden Lagergüter bzw. Lagergutträger mit darauf abgelegten Lagergütern beispielsweise über die Beschickungs- und/oder Entnahmestation 17 des weiteren Langsamlagers 4 in das Lager 1 eingelagert. Die dritte Fördervorrichtung 12 entnimmt die Lagergutträger von der Beschickungs- und/oder Entnahmestation 17 oder dem an sie angrenzenden Lagerplatz 11. Danach lagert die dritte Fördervorrichtung 12 den Lagergutträger entweder auf einem der Langsamlagerplätze 11 oder einem der Hybridlagerplätze 15 ein. Je nach Bedarf kann die dritte Fördervorrichtung 12 Lagergutträger von den Langsamplätzen 11 auf die Hybridlagerplätze 15 befördern. Von den Hybridlagerplätzen 15 können die Lagergutträger durch die zweite Fördervorrichtung 9 oder die erste Fördervorrichtung 6 in das Langsamlager 3 oder das Schnelllager 2 überführt und dort auf einem Langsamlagerplatz 8 bzw. Schnelllagerplatz 5 abgelegt werden. Ferner ist es möglich, die Lagergutträger mit Hilfe der zweiten Fördervorrichtung 9 oder der ersten Fördervorrichtung 6 direkt vom Hybridlagerplatz 15 zu der Beschickung- und/oder Entnahmestation 17 oder 17' des Langsamlagers 3 bzw. Schnelllagers 2 zu befördern.

Eine in Fig. 1 dargestellte erfindungsgemäße Anordnung von Schnelllagern 2, Langsamlager 3 und einem weiterem Langsamlager 4 ermöglichst die bedarfsgerechte Übergabe von Lagergütern über die Hybridlagerplätze 15. Ein Güterfluss findet also vom weiteren Langsamlager 4 aus entweder direkt zum Schnelllager 2 oder über das Langsamlager 3 zum Schnelllager 2 statt. Aus den Schnelllagern 2 werden die Lagergüter zur Entnahme bereitgestellt, können aber auch direkt aus dem Langsamlager 3 entnommen werden. In der Regel nimmt dabei die Lagerumschlagsgeschwindigkeit vom weiteren Langsamlager 4 über das Langsamlager 3 bis zum Schnelllager 2 zu. Vorzugsweise werden in dem Schnelllager A-Artikel, in dem Langsamlager B-Artikel und in dem weiteren Langsamlager C-Artikel gelagert.

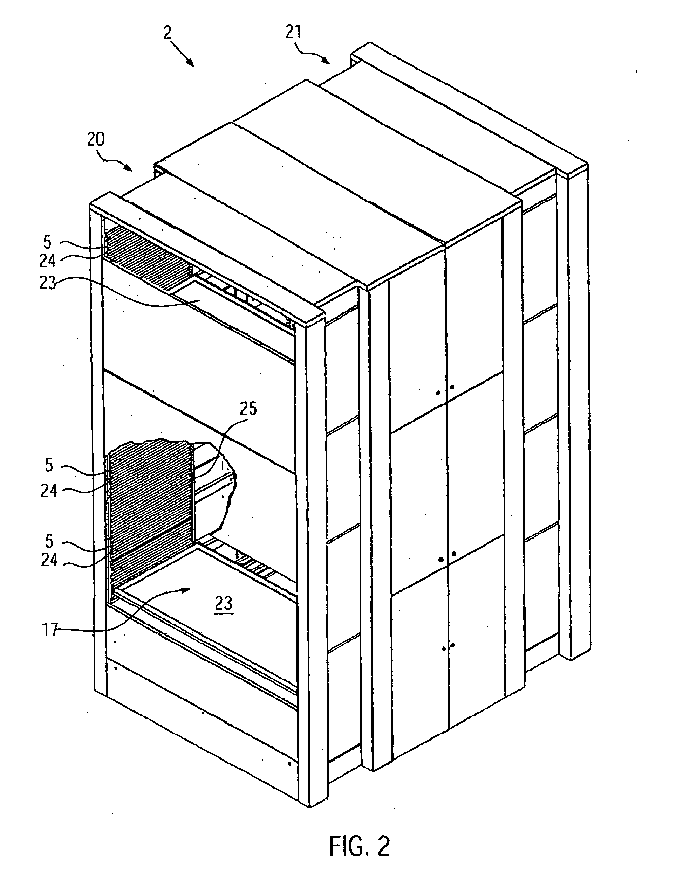

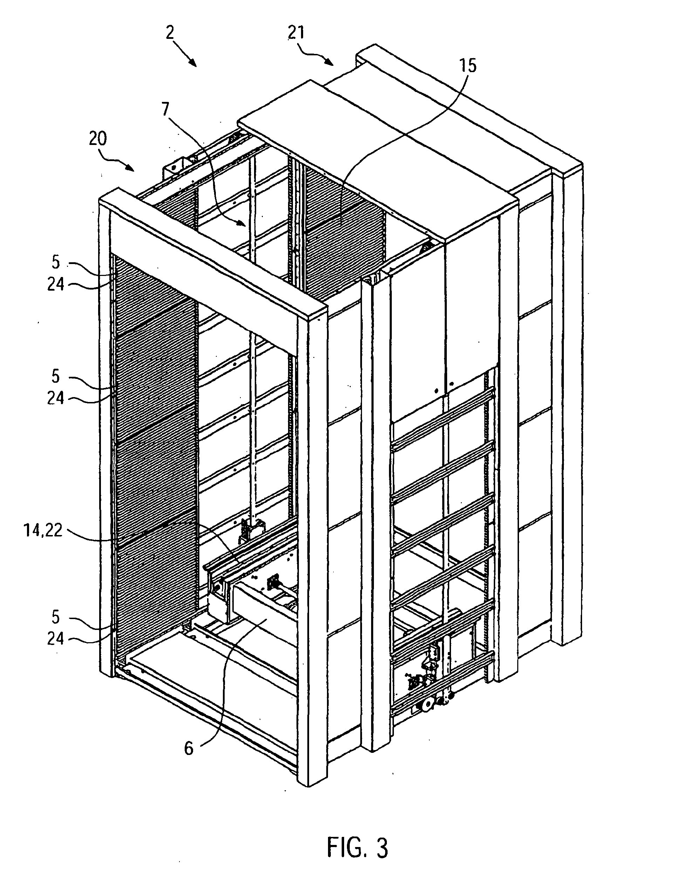

In Fig. 2 ist eine schematische Perspektivansicht des Schnelllagers 2 in Form eines Lagerregals bzw. Lagerliftes gezeigt. Fig. 3 zeigt das Schnelllager 2 ohne Teile seiner Seitenverkleidung. Das in Fig. 2 und Fig. 3 gezeigte Schnelllager 2 verfügt über zwei Regalsäulen 20 und 21, die den ersten Förderbereich 7 begrenzen, der als ein Förderschacht ausgestaltet ist. In dem schachtförmigen Förderbereich 7 ist die auch als Extraktor bezeichnete erste Fördervorrichtung 6 auf- und abbewegbar, deren Lagergutträgeraufnahme 14 mit einer Querfördereinrichtung 22 ausgerüstet ist. Die Fördervorrichtung 6 kann Lagergutträger 23 an unterschiedliche Schnelllagerplätze 5 der Regalsäulen 20 und 21 überführen. Die einzelnen Schnelllagerplätze 5 werden von paarweise übereinander und im Abstand voneinander angeordneten Stützprofilen 24 gebildet, die zur Abstützung von Stützstegen (hier noch nicht gezeigt) an den sich gegenüberliegenden Seiten der Lagergutträger 23 dienen.

Bei dem in Fig. 2 und Fig. 3 gezeigten Schnelllager 2 sind auch in der als Beschickungs- und/oder Entnahmeöffnung ausgestalteten Beschickungs- und/oder Entnahmestation 17 Stützprofile 25 vorgesehen, die ein Einführen von Lagergutträgern 23 in unterschiedlichen Höhenlagen erlauben. Eine Bedienperson hat somit die Möglichkeit, die Lagergutträger 23 an einer für sie jeweils ergonomisch optimalen Position in das Schnelllager 2 zu schieben oder aus diesem zu entnehmen.

Je nach Bedarf kann im vorderen oder wie hier dargestellt im hinteren, also dem ersten Förderbereich 7 zugewandten Teil der Beschickungs- und/oder Entnahmestation 17 ein Lichtgitter 25 angeordnet sein, das die Höhen der auf den Lagergutträgern 23 gelagerten Lagergüter erfassen und die Position der Lagergutträger 23 bestimmen kann.

In einem erfindungsgemäßen Lager 1 kann die von der Beschickungs- und/oder Entnahmestation 17 abgewandte Regalsäule 21 die Hybridlagerplätze 15 umfassen, die sowohl dem Langsamlager 3 als auch dem Schnelllager 2 zugeordnet sind und auf welche die erste Fördervorrichtung 6 und die zweite Fördervorrichtung 9 zugreifen können. Mit anderen Worten kann die Regalsäule 21 des Schnelllagers 2 in das Langsamlager 3 integriert sein.

Alternativ zu der in Fig. 2 und Fig. 3 gezeigten Ausgestaltungsform des Schnelllagers 2 kann dieses auch als Umlaufregal ausgeführt sein, in welchem die Lagergutträger 23 horizontal und/oder vertikal umlaufend zu der Beschickungs- und/oder Entnahmestation 17 bewegt werden.

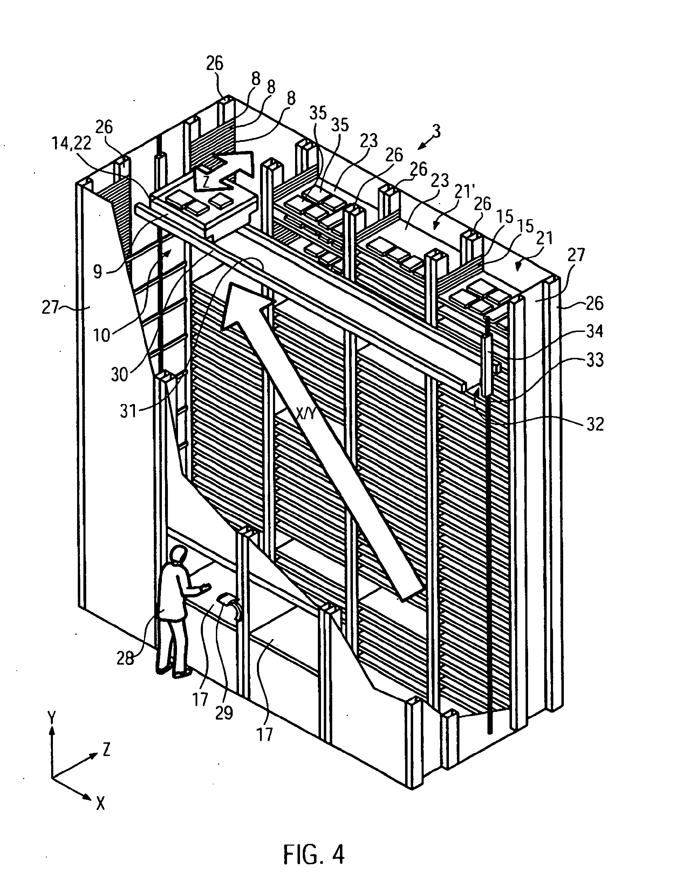

In Fig. 4 ist das Langsamlager 3 in einer schematischen Perspektivansicht gezeigt. Die Langsamlagerplätze 8 sind die wie die Schnelllagerplätze 5 aus horizontalen Stützprofilen 24 gebildet. Die Langsamlagerplätze 8 sind an Vertikalstützen 26 befestigt. Jeweils vier Vertikalstützen 26 bilden eine Regalsäule 21' und beispielsweise die Regalsäule 21, in der sich das Langsamlager 3 mit dem Schnelllager 2 überschneidet und die Hybridlagerplätze 15 angeordnet sind.

Des Weiteren sind außen an dem Langsamlager 3 Wandelemente 27 befestigt, welche das Lager 3 einhausen und sein Inneres vor schädlichen Umwelteinflüssen schützen sowie zugleich einen Anwender bzw. Benutzer 28 davon abhalten, in einen Gefahrenbereich des Langsamlagers 3 einzudringen.

Der Benutzer 28 entlädt und beschickt das Langsamlager 3 an dem Beschickungs- und/oder Entnahmestationen 17, die als Beschickungs- und/oder Entnahmeöffnungen ausgestaltet sind, mit den Lagergutträgern 23. Auf den Lagergutträgern 23 sind Lagergüter 35 abgelegt. Die Lagergutträger 23 werden je nach Bedarf zwischen den Beschickungs- und/oder Entnahmestationen 17 und den Langsamlagerplätzen 8 und Hybridlagerplätzen 15 mit der Fördervorrichtung 9 hin- und herbefördert.

Zur Anforderung oder Einlagerung eines Lagergutträgers 23 kann der Benutzer 28 über ein Schnittstelle 29 mit dem Langsamlager 3 kommunizieren. Bei der Schnittstelle 29 kann es sich beispielsweise um ein Computerterminal oder eine andere beliebige Datenschnittstelle, wie z. B. eine Infrarot-, Funk- oder Nahfunkschnittstelle handeln. Der Benutzer 29 kann eine Bedienperson oder auch ein automatisch oder manuell betriebener Transportwagen sein.

Die zweite Fördervorrichtung 9 verfügt wie die erste Fördervorrichtung 6 über die Lagergutträgeraufnahme 14, die als Querfördereinrichtung 22 ausgestaltet ist und einen Lagergutträger 23 in der Querrichtung Z bewegen kann, um diesen aus der Beschickungs- und/oder Entnahmestation 17 oder von einem Langsamlagerplatz 8 oder Hybridlagerplatz 15 zu entnehmen oder dort abzulegen. Die Lagergutträgeraufname 14 der zweiten Fördervorrichtung 9 ist auf einer Horizontalfördervorrichtung 30 in Form eines Hubbalkens angeordnet, auf dem die zweite Fördervorrichtung 6 in der Horizontalrichtung X beweglich ist. Die Oberseite der Horizontalfördervorrichtung 30 bildet eine Horizontalführung 31 für die zweite Fördervorrichtung 6. Die Horizontalführung 31 ist ihrerseits auf einer Vertikalfördervorrichtung 32 angeordnet. Die Vertikalfördervorrichtung 32 ist aus einem Vertikalführungsorgan 33 und einer Vertikalführung 34 gebildet. Die Vertikalführung 34 ist starr und führt das daran in der Vertikalrichtung Y bewegliche Vertikalführungsorgan 33, an dem wiederum die Horizontalfördervorrichtung 30 bewegungsstarr befestigt ist. Die Vertikalfördervorrichtung 32 kann entweder selber über ein Antriebsaggregat verfügen oder von einer extern angeordneten Kraftmaschine angetrieben werden.

Wie in Fig. 4 schematisch dargestellt ist, kann die zweite Fördervorrichtung 9 einen auf ihr gelagerten Lagergutträger 23 gleich in der Horizontalrichtung X und in der Vertikalrichtung Y durch das Langsamlager 3 bewegen, so dass der Lagergutträger 23 einen diagonalen, möglichst kurzen Weg durch das Langsamlager 3 nehmen kann.

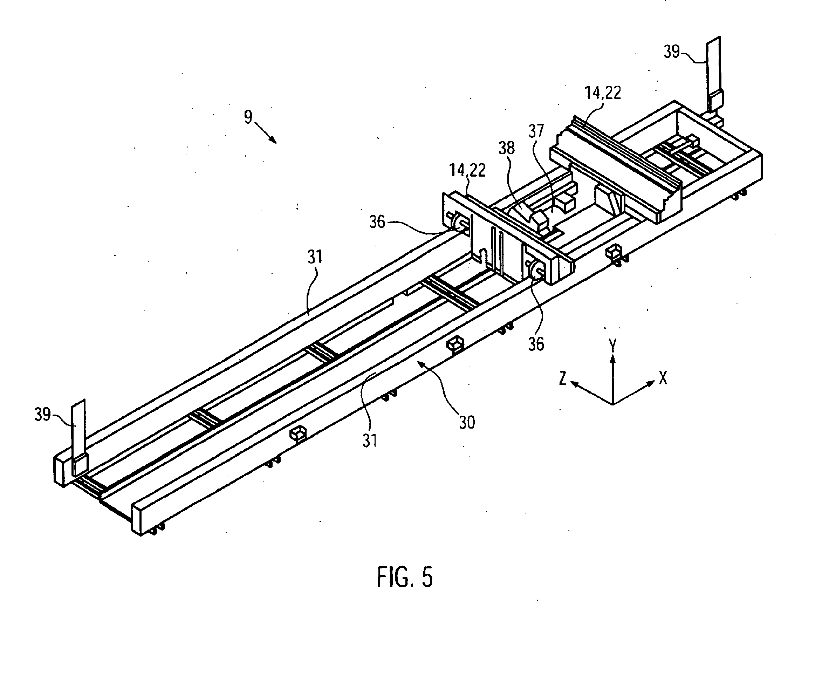

In Fig. 5 ist ein Teil der zweiten Fördervorrichtung 9 in einer schematischen Perspektivansicht gezeigt. Die Lagergutträgeraufnahme 14 ist mit Rädern bzw. Rollen 36 versehen, die auf der Horizontalführung 31 rollen können und die Beweglichkeit der Lagergutträgeraufnahme 14 in der Horizontalrichtung X gewährleisten. Um die Lagergutträgeraufnahme 14 in der Horizontalrichtung X verfahren zu können, ist die Fördervorrichtung 9 mit einer Antriebseinheit 37 ausgerüstet, welche beispielsweise die Rollen 36 antreiben kann oder mit einem Horizontalantriebselement (nicht gezeigt) der Horizontalfördervorrichtung 30 zusammenwirken kann, das beispielsweise als Zahnstange oder Riementrieb ausgestaltet sein kann. Des Weiteren verfügt die zweite Fördervorrichtung 9 über eine zweite Antriebseinheit, mit der Übergabeorgane (hier noch nicht gezeigt) der Lagergutträgeraufnahme 14 angetrieben werden können, um die Lagergutträger 23 in der Querrichtung Z zu bewegen.

Ferner sind an der Horizontalfördervorrichtung 30 Vertikalantriebselemente 39 in Form von Riemen angebracht, mit deren Hilfe die Horizontalfördervorrichtung 30 in der Vertikalrichtung Y bewegbar ist und die an ein Antriebsaggregat gekoppelt sein können.

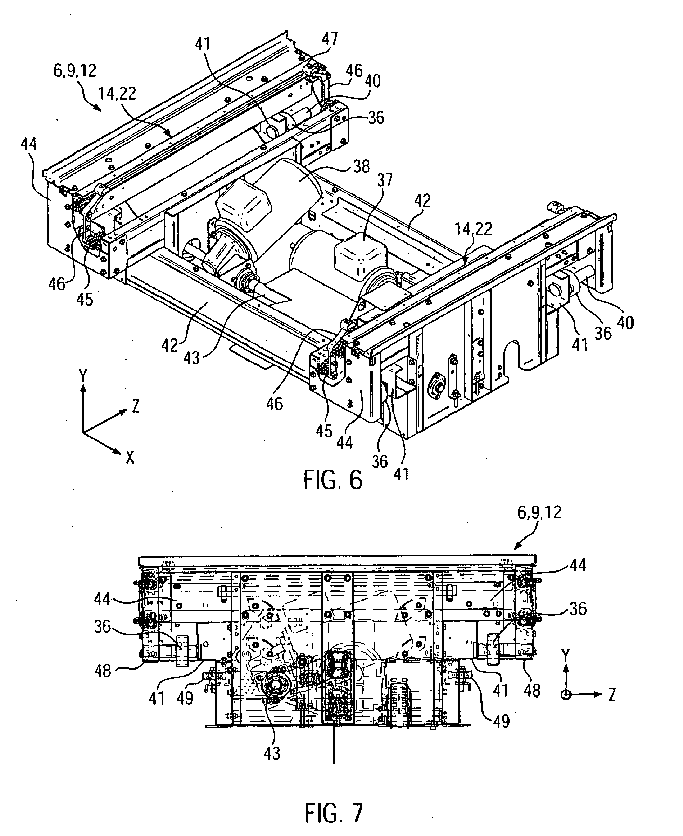

In Fig. 6 ist ein Teil der zweiten Fördervorrichtung 9 in einer schematischen Perspektivansicht gezeigt. Im Wesentlichen kann es sich dabei auch um einen Teil der ersten Fördervorrichtung 6 oder dritten Fördervorrichtung 12 handeln, der die Lagergutträgeraufnahme 22 umfasst. Die Räder bzw. Rollen 36 sind auf Achsen 40 befestigt, die ihrerseits an Radaufhängungen 41 in Form von Blechen gelagert sind. Zwischen zwei Quertraversen 42 sind die Antriebseinheiten 37, 38 angeordnet. Die Antriebseinheit 38 ist über ein Getriebeelement 43 in Form einer Welle mit an jeweils an zwei Verbindungskonsolen 44 angeordneten Querantriebsvorrichtungen 45 in Form von Kettentrieben der Lagergutträgeraufnahme 22 verbunden.

Über die Querantriebsvorrichtungen 45 werden Übergabeorgane 46 in Form von Greifeinheiten der Lagergutträgeraufnahme 14 angetrieben. Die Übergabeorgane 46 verfügen über in der Vertikalrichtung Y von der Lagergutträgeraufnahme 14 vorstehende Übergabeelemente 47 in Form von Greifelementen, die beispielsweise an Rändern, Stützstegen, Schenkeln und/oder Ausschubsicherungen (hier noch nicht gezeigt) der Lagergutträger 23 eingreifen können, um die Lagergutträger 23 in der Querrichtung Z zu bewegen bzw. sie auf die Fördervorrichtungen 6, 9, 12 zu laden oder von ihnen abzuladen. Sollte ein Lagergutträger 23 nicht über entsprechende Einrichtungen, wie Stützstege, Schenkel, Ränder oder Ausschubsicherungen verfügen, so wäre es auch denkbar, dass die Lagergutträgeraufnahme 14 bzw. deren Querfördereinrichtung 22 den Lagergutträger 23 einfach direkt an beispielsweise seiner Unterseite anhebt, um ihn zu verladen.

Die Lagergutträgeraufnahme 22 kann einen Lagergutträger 23 auf unterschiedlichste Art und Weise aus einer Übernahmeposition U in eine Verladeposition L bewegen, wobei der Lagergutträger 23 in der Übernahmeposition U nicht auf der Lagergutträgeraufnahme 14 bzw. der Fördervorrichtung 6, 9, 12 lagert und in der Verladeposition L auf die Fördervorrichtung 6, 9, 12 geladen ist.

In Fig. 7 ist die Fördervorrichtung 6, 9, 12 in einer schematischen Seitenansicht gezeigt. Die Achsen 40 sind zwischen den Radaufhängungen 41 und einer Achsaufnahme 48 der Fördervorrichtung 6, 9, 12 gelagert. Die Räder 36 ragen unterhalb der Verbindungskonsolen 44 entgegen der Vertikalrichtung Y hervor, so dass sie auf den Horizontalführungen 30 laufen können. Zusätzlich verfügt die Fördervorrichtung 6, 9, 12 über seitliche Horizontalführungselemente 49 in Form von axial in Vertikalrichtung Y ausgerichteten Rollen, die seitlich an der Horizontalführung 31 anliegen, um die Fördervorrichtung 6, 9, 12 präzise in der Horizontalrichtung X zu führen.

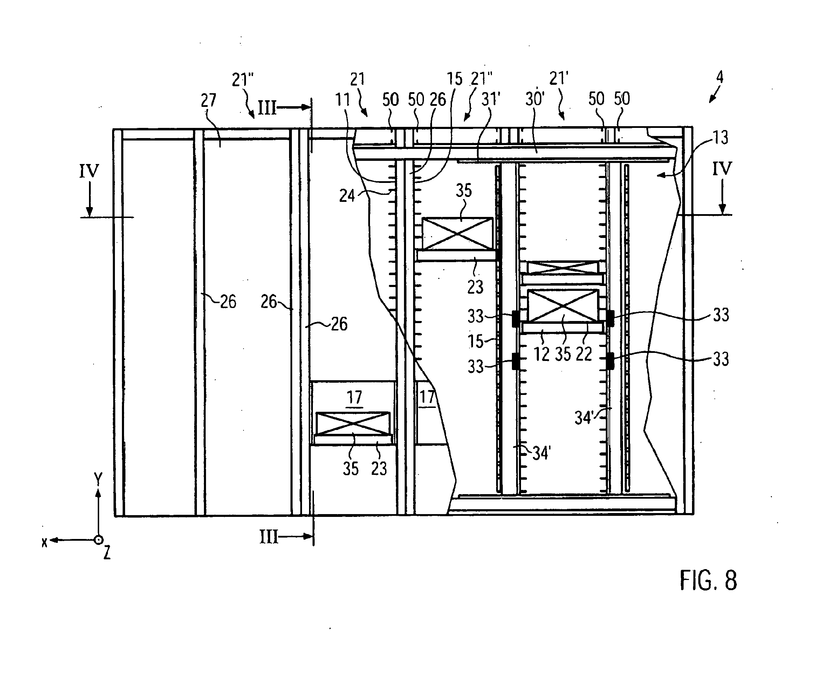

In Fig. 8 ist eine schematische Vorderansicht des weiteren Langsamlagers 4 mit vier nebeneinander angeordneten Paaren von Regalsäulen 21, 21', 21" und teilweise aufgebrochenen Wandelementen 27 gezeigt. Auf der Vorderseite besitzt das weitere Langsamlager 4 zwei Beschickungs- und/oder Entnahmestationen 17 für Lagergüter 35 bzw. diese aufnehmende Lagergutträger 23. In dem dritten Förderbereich 13 ist die dritte Fördervorrichtung 12 angeordnet. Die dritte Fördervorrichtung 12 ist an einer Horizontalfördervorrichtung 30' beweglich ausgestaltet, entlang derer Horizontalführungen 31' die Fördervorrichtung 12 in der Horizontalrichtung X beweglich ist. Im Gegensatz zur Horizontalfördervorrichtung 30 ist die Horizontalfördervorrichtung 30' nicht beweglich, sondern starr an Querträgern 50 des Langsamlagers 4 befestigt. Die Querträger 50 verbinden die Vertikalstützen 26 und halten die Horizontalfördervorrichtung 30'. Eine Beweglichkeit der Fördervorrichtung 12 in der Vertikalrichtung Y ist durch die Vertikalführungsorgane 33 gewährleistet, die an Vertikalführungen 34' in der Vertikalrichtung Y beweglich sind. Die Vertikalführungen 34' sind im Gegensatz zu den Vertikalführungen 32 nicht starr, sondern beweglich an Horizontalfördervorrichtung 30' in der Horizontalrichtung X beweglich angebracht, so dass die Fördervorrichtung 12 in der Horizontalrichtung X verfahren kann.

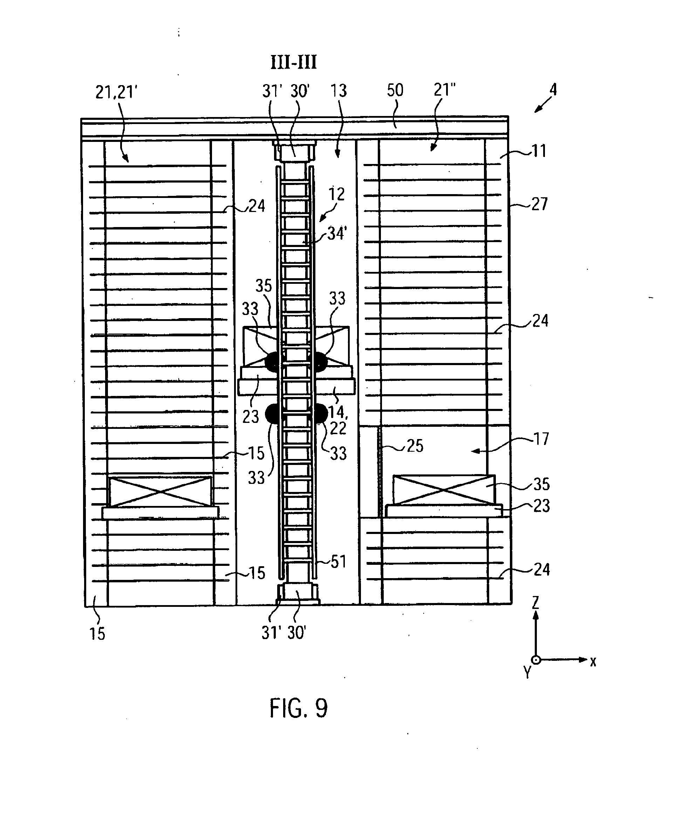

In Fig. 9 ist das weitere Langsamlager 4 in einer schematischen Schnittansicht entlang der Schnittlinie III-III in Fig. 8 gezeigt. Hier wird deutlich, wie die Lagergutträgeraufnahme 14 mit den Vertikalführungsorganen 33 die Vertikalführung 34' umgreift und dank der Ausführung der Vertikalführungsorgane 33 als Rollen entlang der Vertikalführung 34' in der Vertikalrichtung Y beweglich ist. Des Weiteren ist die Vertikalführung 34' entlang der Horizontalführung 31' in der Horizontalrichtung X beweglich. Somit lässt sich die Lagergutträgeraufnahme 14 der dritten Fördervorrichtung 12 in dem Förderbereich 13 in der Horizontalrichtung X und Vertikalrichtung Y bewegen.

Der dritte Förderbereich 13 erstreckt sich als ein Förderschacht in der Vertikalrichtung Y und Horizontalrichtung X zwischen den Regalsäulen 21, 21', 21". In der Regalsäule 21" sind in diesem Ausführungsbeispiel ausschließlich Langsamlagerplätze 11 angeordnet, die von den Stützprofilen 24 gebildet sind. Auf einer der Regalsäulen 21" gegenüberliegenden Seite des Förderbereiches 13 sind die Regalsäulen 21, 21' angeordnet, die Hybridlagerplätze 15 beinhalten, welche beispielsweise von sowohl der dritten Fördervorrichtung 12 als auch der ersten Fördervorrichtung 6 oder der zweiten Fördervorrichtung 9 bedient werden können.

Des Weiteren ist in der Beschickungs- und/oder Entnahmestation 17, wie auch schon in der Beschickungs- und/oder Entnahmestation 17 des Schnelllagers 2, ein Lichtgitter angebracht, mit dem die Höhe der auf den Lagergutträgern 23 abgelegten Lagergüter 35 erfasst werden kann. Ferner ist an der Vertikalführung 32' der Fördervorrichtung 12 eine Leiter 51 befestigt. Die Leiter 51 vereinfacht Wartungsarbeiten in dem weiteren Langsamlager 4.

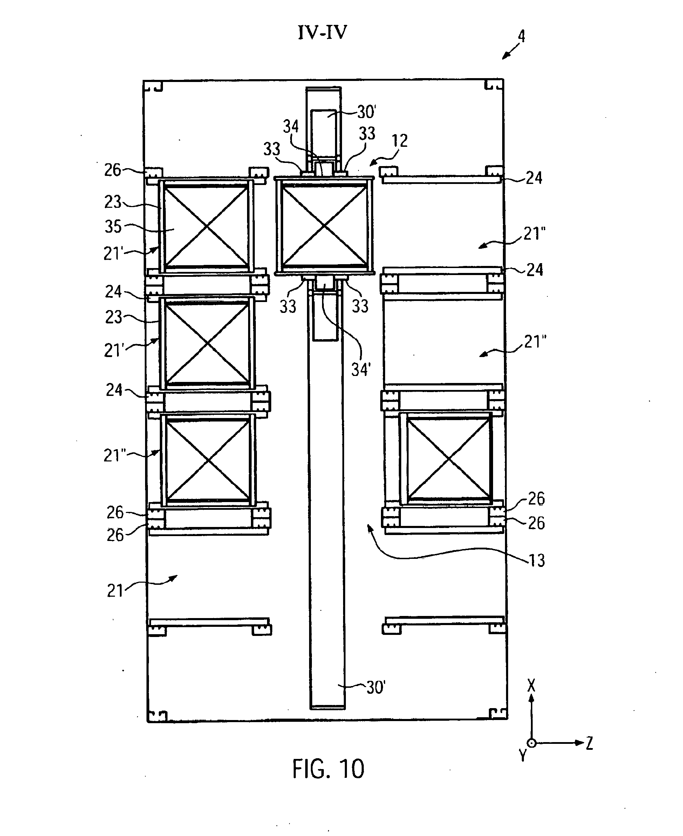

In Fig. 10 ist das Langsamlager 4 in einer schematischen Schnittansicht entlang der Schnittlinie IV-IV in Fig. 8 gezeigt. Hier wird deutlich, wie die zu beiden Seiten des dritten Förderbereiches 13 angeordneten Regalsäulen 21, 21', 21" einen Schacht bilden, in dem die Fördervorrichtung 12 in der Horizontalrichtung X und der Vertikalrichtung Y verfahrbar angeordnet ist. Des Weiteren wird deutlich, dass Lagergutträger 23 samt den darauf abgelegten Lagergütern 35 auf den horizontalen Stützprofilen 24 abgelegt sind, welche die Lagerplätze 5, 8,15 bilden.

In den Regalsäulen 21" sind ausschließlich weitere Langsamlagerplätze 11 angeordnet. Die Regalsäule 21 kann das weitere Langsamlager 4 gemeinsam mit dem Schnelllager 2 nutzen. Somit sind in der Regalsäule 21 Hybridlagerplätze 15 angeordnet. Die Regalsäulen 21' können sowohl den weiteren Langsamlager 4 als auch mit dem Langsamlager 3 zugeordnet sein. Somit sind in der Regalsäule 21' ebenfalls Hybridlagerplätze angeordnet.

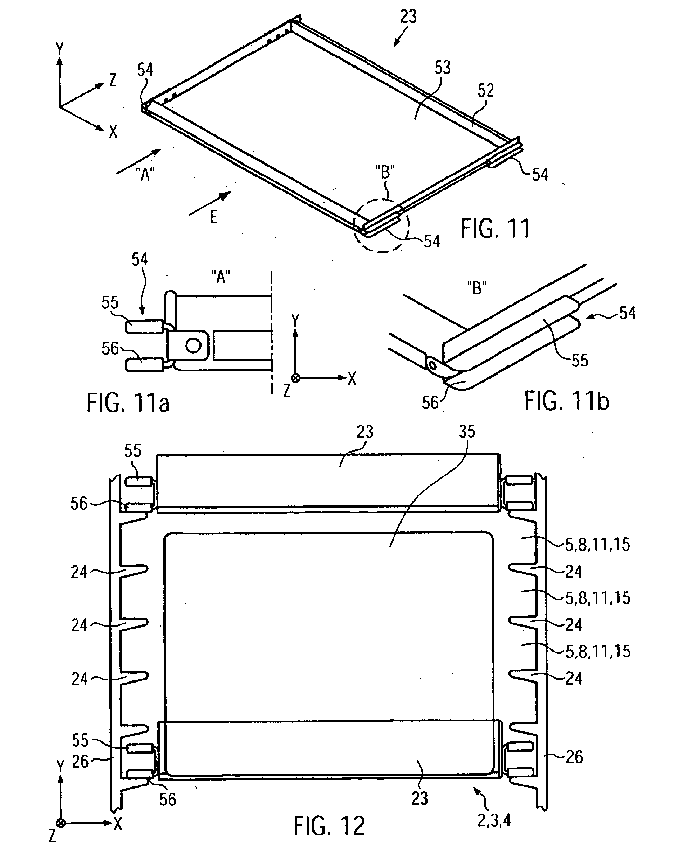

In Fig. 11 ist einer der Lagergutträger 23 in einer schematischen Perspektivansicht gezeigt. Der Lagergutträger hat eine von einem Rand 52 umgebene Lagerfläche 53. Seitlich sind an dem Lagergutträger 23 in der zum Ein- und Ausschieben bzw. Transferieren des Lagergutträgers 23 vorgesehenen Querrichtung Z verlaufende Stützstege 24 an der äußeren Seite des Randes 52 befestigt. Folglich stellt die Querrichtung Z in diesem Ausführungsbeispiel eine Einschubrichtung E für den Lagergutträger 23 dar.

In der Fig. 11a ist ein Teilausschnitt aus Fig. 11 entlang der Sichtachse "A" gezeigt, der eine vergrößerte Ansicht des Stützsteges 54 darstellt. Der Stützsteg 24 ist aus zwei übereinander angeordneten Stützschenkeln 55, 56 gebildet, auf denen der Lagergutträger abgestellt werden kann.

Aus Fig. 11b, einer vergrößerten Ansicht des Details "B" in Fig. 11, ist ersichtlich, wie der Stützsteg 54 mit seinen Stützschenkeln 55, 56 an den Lagergutträger 23 befestigt ist.

In Fig. 12 ist ein Abschnitt zwischen zwei Vertikalstützen 26 eines Lagerregals 2, 3, 4 gezeigt. In dem Abschnitt werden Lagerplätze 5, 8, 11, 15 jeweils von in der Vertikalrichtung Y auf einer Höhe liegenden horizontalen Stützprofilen 24 gebildet. In diesem Beispiel nimmt das Lagergut 35 auf dem Lagergutträger 23 in seiner Höhe mehrere Lagerplätze 5, 8, 11, 15 ein. Je nach Höhe des Lagergutes 35 kann ein weiterer Lagergutträger 23 darüber auf dem nächstmöglichen Lagerplatz 5, 8, 11, 15 bzw. dessen horizontalen Stützprofilen 24 abgelegt werden. Dabei bilden die horizontalen Stützprofile 24 durch ihren gleichförmigen Abstand voneinander in der Vertikalrichtung Y ein Höhenraster, in dem die Lagergutträger 23 frei übereinander angeordnet werden können. Die Unterteilung der Stützstege 54 in einen oberen Stützschenkel 55 und einen unteren Stützschenkel 56 ermöglicht eine Verdopplung des Höhenrasters in dem Sinne, dass der Lagergutträger entweder auf seinem oberen Stützschenkel 55 oder seinem unteren Stützschenkel 56 abgelegt werden kann. Der vertikale Abstand zwischen den Stützschenkeln 55, 56 ist vorzugsweise geringer als der vertikale Abstand zwischen den horizontalen Stützprofilen 54.

Des Weiteren wird in Fig. 12 deutlich, dass der Lagergutträger 23 in der Querrichtung Z auf den Lagerplätzen 5, 8, 11, 15 verschieblich angeordnet ist. Um den Lagergutträger 23 auf den Lagerplätzen 5, 8, 11, 15 oder der Fördervorrichtung 6, 9, 12 gegen Verschieben zu sichern, kann dieser bzw. dessen Stützsteg 54 mit einer Ausschubsicherung (nicht gezeigt) versehen sein.

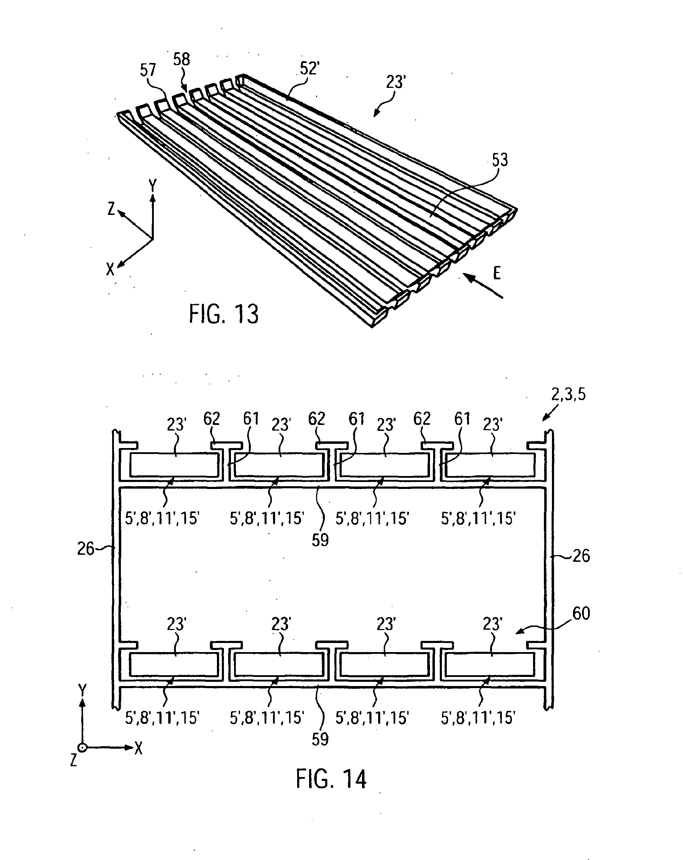

In Fig. 13 ist eine weitere Ausführungsform eines erfindungsgemäßen Lagergutträgers 23' in einer schematischen Perspektivansicht gezeigt. Die Lagerfläche 53 des Lagergutträgers 23' ist von einem Rand 52' bzw. einer Umrandung umgeben, die an ihren in der Einschubrichtung E weisenden Abschnitten in der Vertikalrichtung Y offene Aussparungen 57 aufweist. Die Aussparungen 57 reichen jeweils zumindest abschnittsweise in Rillen 58 des Lagergutträgers 23' hinab, die gewissermaßen als Sicken in der Einschubrichtung E verlaufen und die Stabilität des Lagergutträgers 23' und seine Gleitfähigkeit in der Einschubrichtung erhöhen. Des Weiteren erleichtern die Aussparungen 57 ein Greifen des Lagergutträgers beispielsweise mit Übergabeorganen 56 der Fördervorrichtungen 6, 9, 12.

In Fig. 14 ist ein für eine Aufnahme der Lagergutträger 23' ausgestalteter Abschnitt eines Lagerregals 2, 3, 5 in einer schematischen Vorderansicht entlang der Querrichtung Z bzw. Einschubrichtung E gezeigt. Hier ist eine Ablage 59 als ein sich zwischen zwei Vertikalstützen 26 erstreckender Boden einer Vielzahl von Lagerplätzen 5', 8', 11', 12' ausgestaltet. Der zwischen den Vertikalstützen 26 befindliche Bereich bildet somit ein Lagerabteil 60, in dem eine Vielzahl von Lagerplätzen 5', 8', 11', 15' in der Horizontalrichtung X nebeneinander angeordnet ist. Die einzelnen Lagerplätze 5', 8', 11', 15' sind von in der Querrichtung Z verlaufenden Unterteilungselementen 61 voneinander getrennt. Somit können die Lagergutträger 23 in der Horizontalrichtung X nicht verschoben werden und verbleiben auf einem für sie vorgesehenen Lagerplatz 5', 8', 11', 15', solange sie nicht in bzw. entgegen der Einschubrichtung E ein- bzw. ausgelagert werden. Die Unterteilungselemente 61 sind wiederum mit vertikalen Begrenzungselementen 62 versehen, die sich in einer Projektion in der Vertikalrichtung Y mit dem Lagerplatz überlappen, so dass Bewegungen der Lagergutträger in der Vertikalrichtung Y begrenzt sind.

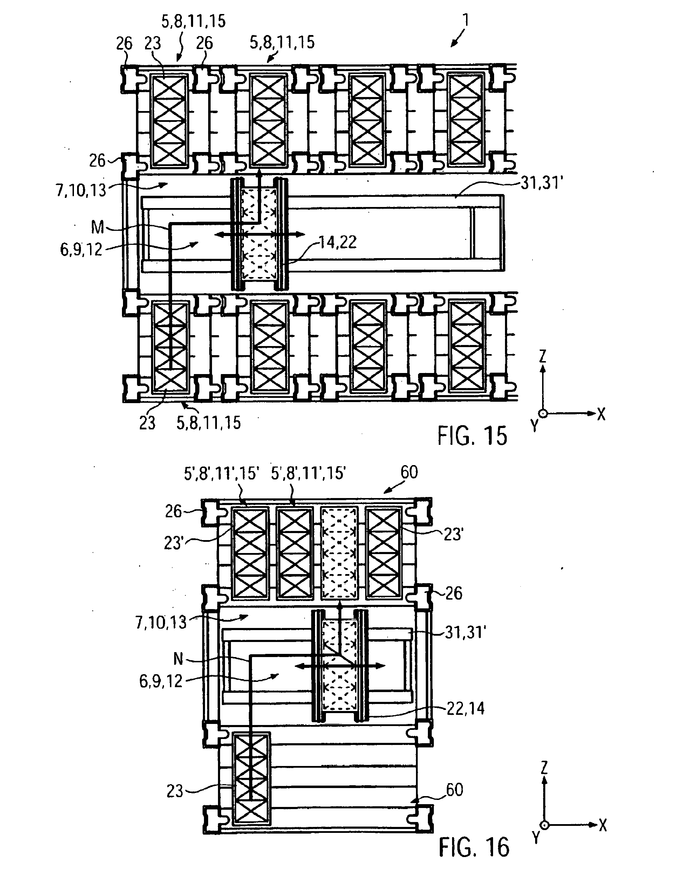

In Fig. 15 ist ein Abschnitt eines erfindungsgemäßen Lagers 1 in einer Draufsicht gezeigt, in dem jeweils ein Lagerplatz 5, 8, 11, 15 in der Horizontalrichtung X zwischen Vertikalstützen 26 angeordnet ist. Die Fördervorrichtung 6, 9, 12 bewegt einen Lagergutträger 23 entlang eines Weges M von einem der Lagerplätze 5, 8, 11, 15 aus auf einen der Lagerplätze 5, 8, 11, 15, der auf einer dem Förderbereich 7, 10, 13 in der Querrichtung Z gegenüberliegenden Seite und in der Horizontalrichtung X direkt benachbarten Lagerplatz 5, 8, 11, 15. Hierbei wird deutlich, dass die Fördervorrichtung 6, 9, 12 in der Horizontalrichtung X verlaufenden Abschnitt des Weges einen durch zwei der Vertikalstützen 26 vorgegebenen Abstand zwischen zwei Lagerplätzen 5, 8, 11, 15 zurücklegen muss.

In Fig. 16 ist ein Abschnitt eines erfindungsgemäßen Lagers 1 in einer Draufsicht gezeigt, in dem eine Vielzahl von Lagerplätzen 5', 8', 11', 15' in einem zwischen den Vertikalstützen 26 angeordneten Lagerabteil 60 untergebracht ist. Hier verfährt die Fördervorrichtung 6, 9, 12 zum Umlagern des Lagergutträgers 23 ebenfalls in der Horizontalrichtung X, kann jedoch bei einer gleichen Weglänge ihres Verfahrweges N in der Horizontalrichtung X wie beim Verfahrweg M den Abstand zwischen zwei Lagerplätzen 5', 8', 11', 15' zurücklegen. Somit verkürzen sich die zwischen den der Horizontalrichtung X nebeneinander angeordneten Lagerplätze 5', 8', 11', 15' zurückzulegenden Wege bei einer Anordnung von mehreren Lagerplätzen 5', 8', 11', 15' in einem Lagerabteil 60 zwischen Vertikalstützen 26 gegenüber den zwischen den Lagerplätzen 5, 8, 11, 15 zurückzulegenden Wegen. Folglich sind die Zugriffszeiten bei einer Zusammenfassung der Lagerplätze 5', 8', 11', 15' in einem Lagerabteil 60 kürzer als die Zugriffszeiten bei jeweils nur einem zwischen Vertikalstützen 26 angeordneten Lagerplatz 5, 8, 11, 15.

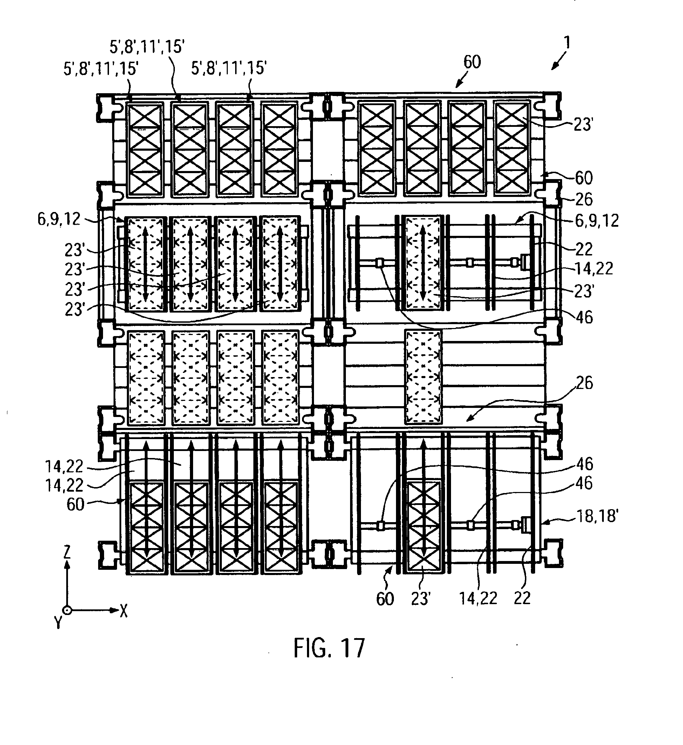

In Fig. 17 ist ein Abschnitt eines erfindungsgemäßen Lagers 1 in einer schematischen Draufsicht gezeigt. Hier sind mehrere nebeneinander angeordnete Lagerplätze 5', 8', 11', 15' in Lagerabteilen 60 zusammengefasst. Die Fördervorrichtungen 6, 9, 12 sind mit einer Vielzahl von Lagergutträgeraufnahmen 14 versehen, die in der Horizontalrichtung X nebeneinander angeordnet sind. Jede der Lagergutträgeraufnahmen 14 der Fördervorrichtungen 6, 9, 12 sind mit wenigstens einem der Übergabeorgane 46 versehen. Die Übergabeorgane 46 der verschiedenen auf einer Fördervorrichtung 6, 9, 12 angeordneten Lagergutträgeraufnahmen 14 bzw. Querfördereinrichtungen 22 können unabhängig voneinander gesteuert und betrieben werden. Somit kann, wie auf der rechten Seite des in Fig. 17 gezeigten Abschnittes des Lagers 1 gezeigt, ein einzelner Lagergutträger beliebig von einer Übergabevorrichtung 46 einer Lagergutträgeraufnahme 14 in der Querrichtung Z bewegt werden. Es können alternativ auch alle Lagergutträger 23' innerhalb eines Lagerabteiles 60 gleichzeitig von den Übergabeorganen 46 der Fördervorrichtung 6, 9, 12 verschoben werden. Dies ermöglicht beispielsweise bei einer in der Horizontalrichtung X und Vertikalrichtung Y verfahrbaren Fördervorrichtung 6, 9, 12, dass diese auf der Vielzahl ihrer Lagergutträgeraufnahmen 14 eine Kommission von auszuliefernden Artikeln zusammenstellt und die gesamte Kommission in einem Lagerabteil 60 im Wesentlichen gleichzeitig einlagert. Alternativ kann eine fertig gestellte Kommission oder schlicht der gesamte Inhalt eines Lagerabteiles 60 auf einen Schlag von einer mehrere Lagergutträgeraufnahmen 22 aufweisenden Fördervorrichtung 6, 9, 12 entladen werden.

Zusätzlich zu den Fördervorrichtungen können auch die Transfervorrichtungen 17, 17' in einem Lagerabteil 60 oder auf einzelnen Lagerplätzen 5, 5', 8, 8', 11, 11' 15, 15' mit Lagergutträgeraufnahmen 14 ausgerüstet sein, die es erlauben, mittels Übergabeorganen 46 die Lagergutträger 23, 23' in der Querrichtung Z zu verschieben. Wie in Fig. 17 im rechten Teil des Abschnittes des Lagerregals 1 gezeigt, kann beispielsweise ein einzelner Lagergutträger 23' von der Transfereinrichtung 17, 17' bzw. einem Lagerplatz 5', 8', 11', 15' zu einem in der Querrichtung Z benachbarten Lagerplatz 5', 8', 11', 15' verschoben werden. Alternativ kann, wie im linken Teil des Abschnittes des Lagers 1 gezeigt, ein gesamtes Lagerabteil 60 bzw. die darin aufgenommenen Lagergutträger 23' gleichzeitig von der Transfereinrichtung 17, 17' bzw. von auf den Lagerplätzen 23' angeordneten Übergabeorganen 46 ein- oder ausgelagert werden. Dies ermöglicht beispielsweise, komplette Kommissionen in einem Lagerabteil auf nebeneinander angeordneten Lagerplätzen 5', 8', 11', 15' zusammenzustellen und die Kommission auf einen Schlag in ein in der Querrichtung Z benachbartes Lagerabteil zu überführen.

Im Rahmen des Erfindungsgedankens sind Abweichungen von den oben beschriebenen Ausführungsbeispielen möglich. So kann das Lager 1 beliebig aus Schnelllagern 2, Langsamlagern 3 und weiteren Langsamlagern 4 zusammengesetzt sein. In der Regel nimmt die in den Lagerabschnitten 2, 3, 4 aufgenommene Menge an Lagergütern vom Schnelllager 2 über das Langsamlager 3 zum weiteren Langsamlager 4 zu, während die Zugriffsgeschwindigkeiten T_{S}, T_{L}, T_{LL} abnehmen. Diese definieren sich aus sowohl einer Geschwindigkeit der Fördervorrichtungen 6, 9, 12 als auch einer Größe der Lagerabschnitte, 2, 3, 4. Je größer der Lagerabschnitt 2, 3, 4, desto geringer die durchschnittliche Zugriffsgeschwindigkeit bzw. desto höher die Zugriffszeit Tₛ, T_{L}, T_{LL}. Diese Zeiten können beispielsweise als eine Zeit definiert werden, die eine Fördervorrichtung 6, 9, 12 benötigt, um aus einer definierten Ausgangslage, beispielsweise von der Beschickungs- und/oder Entnahmestation 17, 17' zu den Lagerplätzen 5, 5', 8, 8', 11, 11', 15, 15' in die Übernahmeposition U zu gelängen, einen Lagergutträger in die Verladeposition L zu bringen und nach dem Weg zurück zur Beschickungs- und/oder Entnahmestation 17, 17' dort abzuladen. Die durchschnittlichen Zugriffszeiten T_{S}, T_{L}, T_{LL}, können auch mit Hilfe von Teilabschnitten des oben beschriebenen Weges der Fördervorrichtung 6, 9, 12 definiert sein. Die durchschnittlichen und Maximalgeschwindigkeiten der Fördervorrichtungen 6, 9, 12 sind Funktionen der jeweils zu bewegenden Masse und der von den Lagergutträgeraufnahmen 14 zurückzulegenden Wege.

Die lediglich in der Vertikalrichtung Y verfahrbare Fördervorrichtung 6 ist im Allgemeinen schneller als die in der Vertikalrichtung Y und zusätzlich in der Horizontalrichtung X verfahrbare Fördervorrichtung 9. Letztere ist hingegen meist schneller als die Fördervorrichtung 12. Jedoch lassen sich mit der Fördervorrichtung 12 längere Regalreihen, also größere Erstreckungen des Lagers 1 in der Horizontalrichtung X bewerkstelligen, weil deren Horizontalfördervorrichtung 30' beliebig lang ausgestaltet und mit Hilfe der Quertraversen 40 gestützt sein kann. Hingegen ist die Länge der Horizontalfördervorrichtung 30 der Fördervorrichtung 9 auf ein gewisses Maximalmaß begrenzt, weil als Horizontalführungen 31 eingesetzte Träger je nach Art der zu lagernden Güter und deren Masse sowie der Anforderungen an die Fördervorrichtung 9 eine bestimmte Maximallänge nicht überschreiten können. Somit hat das weitere Langsamlager 4 in diesem Ausführungsbeispiel die größte Erstreckung in der Horizontalrichtung X, gefolgt von dem kleineren Langsamlager 3 und dem noch kleineren Schnelllager 2.

Des Weiteren sind die Hybridlagerplätze 15, 15' beliebig in Hybridlagerbereichen 16 anordenbar. Die Hybridlagerbereiche 16 können dynamisch konfiguriert werden. D.h. die darin befindlichen Lagerplätze 5, 5', 8, 8', 11, 11', 15, 15' können beliebig als Schnelllagerplätze 5, 5', Langsamlagerplätze 8, 8', weitere Langsamlagerplätze 11, 11' und Hybridlagerplätze 15, 15' definiert werden. Die frei Zuweisbarkeit der Lagerplätze 5, 5', 8, 8', 11, 11', 15, 15' erhöht die Flexibilität des Lagers 1. So, wie die Hybridlagerbereiche 16 frei konfigurierbar sind, können sie beliebig aus modular verbindbaren Regalsäule 20, 21, 21', 21" gebildet werden. Die Lagerabschnitte 3, 4, 5 können beliebig aus Stützprofilen 24, Vertikalstützen 26, Horizontalfördervorrichtungen 30, 30', Horizontalführungen 31, 31', Vertikalfördervorrichtungen 32, 32' und Querträgern 50 konstruiert sein, die beliebig starr oder unbeweglich angeordnet sein können.

Die Lagergutträger 23, 23' in der hier beschriebenen Tablarform auszugestalten ist nicht obligatorisch. Sie können jede andere beliebige Form aufweisen, wie beispielsweise Kisten, Getränkekästen, Bügel oder Haken, die mit den Lagerplätzen 5, 5', 8, 8', 11, 11', 15, 15' zusammenwirken können. Alternativ können die Lagergüter 35 direkt auf den Lagerplätzen 5, 5', 8, 8', 11, 11', 15, 15' eingelagert werden, ohne Lagergutträger 23, 23' zu verwenden.

Die Lagergutträgeraufnahmen 14, Beschickungs- und/oder Entnahmestationen 17, 17' und Transfervorrichtungen 18, 18' können in der Horizontal- X, Vertikal- Y und Querrichtung Z beliebig aneinander gereiht und kombiniert werden, um die Lagergutträger 23, 23' zu befördern. Des Weiteren ist es nicht obligatorisch, eine Querfördereinrichtung 22 mit einer Lagergutträgeraufnahme 14 zu kombinieren. Die Querfördereinrichtung 22 kann auch anderweitig an der Fördereinrichtung 6, 9, 12 angebracht sein, solange sie auf die Lagerplätze 5, 5', 8, 8', 11, 11', 15, 15' zugreifen bzw. Lagergutträger 23, 23' oder Lagergut extrahieren und einlagern kann.

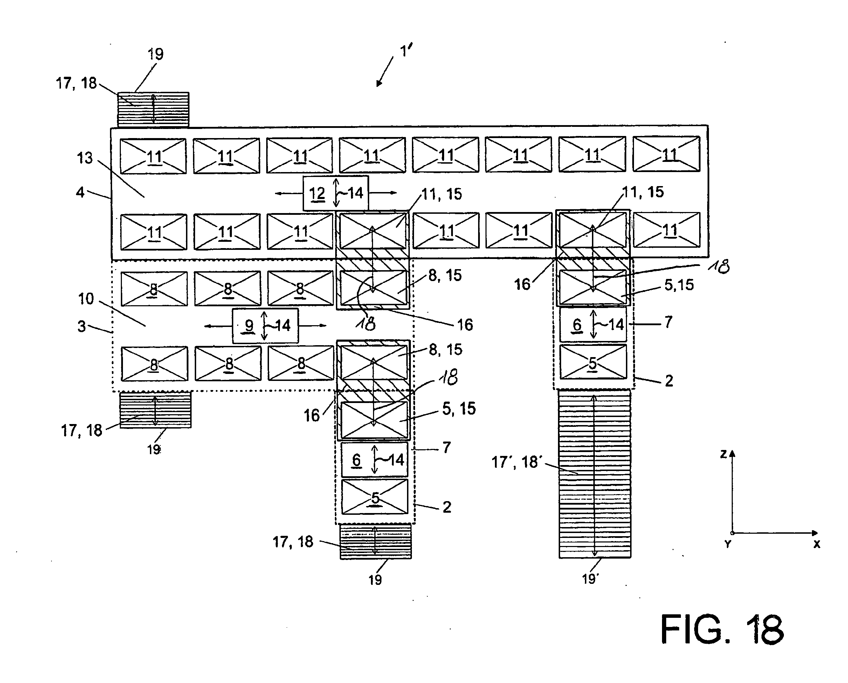

Fig. 18 zeigt eine weitere Ausführungsform eines erfindungsgemäßen Lagers 1' in einer schematischen Draufsicht. Eines der Schnelllager 2 ist über eine der Transfervorrichtungen 18 mit dem Langsamlager 3 verbunden. Mit Hilfe der Transfervorrichtung 18 können Lagergüter- bzw. Lagergutträger 23, 23' vom Langsamlagerplatz 8 des Langsamlagers 3 zum Schnelllagerplatz 5 des Schnelllagers 2 und zurückbefördert werden. Die durch die Transfervorrichtung 18 verbundenen Lagerplätze 5,8 bilden Hybridlagerplätze 15 des Hybridlagerbereichs 16, in dem durch die Transfervorrichtung 18 auf sowohl die Langsamlagerplätze 5 als auch die Schnelllagerplätze 8 zugreifbar ist.

Analog zur Verbindung des Schnelllagers 2 mit dem Langsamlager 3 ist das Langsamlager 3 über eine weitere Transfervorrichtung 18 mit dem weiteren Langsamlager 4 verbunden. Mit Hilfe der Transfervorrichtung 18 kann sowohl auf den Langsamlagerplatz 8 als auch auf den weiteren Langsamlagerplatz 11 zugegriffen werden. Somit bilden der Langsamlagerplatz 8 und der weitere Langsamlagerplatz 11 Hybridlagerplätze 15 im weiteren Hybridlagerbereich 16.

Das weitere Langsamlager 4 ist seinerseits über eine weitere Transfervorrichtung 18 mit einem weiteren Schnelllager 2 verbunden. Mit Hilfe der Transfervorrichtung 18 können Lagergüter bzw. Lagergutträger 23, 23' zwischen einem der weiteren Langsamlagerplätze 11 und dem Schnelllagerplatz 5 hin und her bewegt werden, die somit jeweils Hybridlagerplätze 15 in einem weiteren Hybridlagerbereich 16 bilden.

## Patentansprüche

1. Lager (1, 1'), insbesondere Kommissionslager mit Lagerplätzen (5, 5', 8, 8', 11, 11', 15, 15'), für Lagergüter (35) aufnehmende Lagergutträger (23, 23'),
mit einem Schnelllager (2) zur bedarfsgerechten schnellen Abholung des Lagergutes (35), wobei das Schnelllager (2) wenigstens einen ersten Förderbereich (7) umfasst, der an wenigstens einer Seite von Schnelllagerplätzen (5, 5') begrenzt ist und in dem eine erste automatische Fördervorrichtung (6) mit einer durchschnittlichen Schnellzugriffszeit (T_{S}) auf die Schnelllagerplätze (5, 5') beweglich angeordnet ist, und
mit einem Langsamlager (3), das wenigstens einen zweiten Förderbereich (10) umfasst, der an wenigstens einer Seite von Langsamlagerplätzen (8, 8') begrenzt ist und in dem eine zweite automatische Fördervorrichtung (9) mit einer durchschnittlichen Langsamzugriffszeit (T_{L}) auf die Langsamlagerplätze (8, 8') beweglich angeordnet ist,
wobei wenigstens ein Hybridlagerplatz (15, 15') sowohl Schnelllagerplatz (5, 5') als auch Langsamlagerplatz (8, 8') ist, und wobei eine durchschnittliche Langsamzugriffszeit (T_{L}) größer als die durchschnittliche Schnellzugriffszeit (T_{S}) ist, **dadurch gekennzeichnet, dass** das Schnelllager (2) und das Langsamlager (3) jeweils mit wenigstens einer an wenigstens einen Lagerplatz (5, 5', 8, 8', 11, 11', 15, 15') angrenzenden und/oder in diesen integrierten Beschickungs- und/oder Entnahmestation (17, 17') versehen sind, über die das Lager (1) mit Lagergutträgern (23, 23') beschickt oder über die Lagergut (35) aus dem Lager (1, 1') entnommen werden kann.

2. Lager (1, 1') nach Anspruch 1, **dadurch gekennzeichnet, dass** die Anzahl der Langsamlagerplätze (8, 8') größer als die Anzahl der Schnelllagerplätze (5, 5') ist.

3. Lager (1, 1') nach Anspruch 1 oder 2, **dadurch gekennzeichnet, dass** wenigstens einer der Förderbereiche (7, 10, 13) als ein an wenigstens zwei sich gegenüberliegenden Seiten von Lagerplätzen (5, 5', 8, 8', 11, 11', 15, 15') begrenzter Förderschacht ausgestaltet ist.

4. Lager (1, 1') nach einem der Ansprüche 1 bis 3, **dadurch gekennzeichnet, dass** eine Vielzahl von direkt benachbarten Hybridlagerplätzen (15, 15') einen zusammenhängenden Hybridlagerbereich (16) bilden.

5. Lager (1, 1') nach einem der Ansprüche 1 bis 4, **dadurch gekennzeichnet, dass** wenigstens eine der automatischen ersten und zweiten Fördervorrichtungen (6, 9) wenigstens eine zur Aufnahme von Lagergutträgern ausgestaltete Aufnahmeebene aufweist, die entlang einer Vertikalrichtung (Y) und/oder einer Horizontalrichtung (X) des Lagers (1, 1') beweglich ist und eine Vielzahl von nebeneinander angeordneten Lagergutträgeraufnahmen (14) zur Aufnahme jeweils mindestens eines Lagergutträgers (23, 23') umfasst.

6. Lager (1, 1') nach einem der Ansprüche 1 bis 5, **dadurch gekennzeichnet, dass** eine stationäre Transfereinrichtung (17, 17') an wenigstens einen Lagerplatz (5, 5', 8, 8', 11, 11', 15, 15') angrenzt und/oder in diesen integriert ist, die ausgestaltet ist, den wenigstens einen angrenzenden Lagerplatz (5, 5', 8, 8', 11, 11', 15, 15') mit Lagergutträgern (23, 23') zu beschicken und/oder Lagergutträger (23, 23') von diesem zu entnehmen.

7. Lager (1, 1') nach einem der Ansprüche 1 bis 6, **dadurch gekennzeichnet, dass** eine Vielzahl von nebeneinander angeordneten Lagerplätzen (5, 5', 8, 8', 11, 11', 15, 15') und/oder eine Vielzahl von Lagergutträgeraufnahmen (22) der Beschickungs- und/oder Entnahmestation (17, 17'), der Transfereinrichtung (18, 18') und/oder der Fördervorrichtung (6, 9, 12) mit wenigstens einem Übergabeorgan (46) ausgestattet ist bzw. sind, das mindestens ein Übergabeelement (47) aufweist, das ausgestaltet ist, mit wenigstens einem Lagergutträger (23, 23') zusammen zu wirken und diesen zumindest in einer Querrichtung (Z) des Lagers (1, 1') zu bewegen.

8. Lager (1, 1') nach Anspruch7, **dadurch gekennzeichnet, dass** die Übergabeorgane (46) unabhängig voneinander steuerbar sind.

9. Lager (1, 1') nach einem der Ansprüche 1 bis 8, **dadurch gekennzeichnet, dass** ein eine Vielzahl von nebeneinander liegenden Lagerplätzen (5, 5', 8, 8', 11, 11', 15, 15') umfassendes Lagerabteil (60) zwischen Vertikalstützen (26) des Lagers (1, 1') angeordnet ist, die über dem Lagerabteil (60) angeordnete Lagerplätze (5, 5', 8, 8', 11, 11', 15, 15') abstützen.

10. Lager (1, 1') nach Anspruch 9, **dadurch gekennzeichnet, dass** zumindest abschnittsweise zwischen wenigstens zwei Lagerplätzen (5, 5', 8, 8', 11, 11', 15, 15') eines Lagerabteils (60) mindestens ein entlang der Querrichtung (Z) des Lagers (1, 1') verlaufendes horizontales Unterteilungselement (61) angeordnet ist, das die wenigstens zwei Lagerplätze (5, 5', 8, 8', 11, 11', 15, 15') in der Horizontalrichtung (X) voneinander abgrenzt und die Lagergutträger (23, 23') in der Querrichtung (Z) führt.

11. Lager (1, 1') nach Anspruch 10, **dadurch gekennzeichnet, dass** das mindestens eine Unterteilungselement (61) ein sich in einer Projektion in der Vertikalrichtung (Y) mit dem Lagerplatz (5, 5', 8, 8', 11, 11', 15, 15') überlappendes vertikales Begrenzungselement (62) aufweist, das Bewegungen der Lagergutträger (23, 23') in der Vertikalrichtung (Y) begrenzt.

12. Lager (1, 1') nach einem der Ansprüche 5 bis 11, **dadurch gekennzeichnet, dass** die Anzahl von Lagergutträgeraufnahmen (14) der Beschickungs- und/oder Entnahmestation (17, 17'), der Fördervorrichtung (6, 9, 12) und/oder der Transfervorrichtung (18, 18') gleich der Anzahl der Lagerplätze (5, 5', 8, 8', 11,11', 15, 15') in einem Lagerabteil (60) ist.

13. Lager (1, 1') nach einem der Ansprüche 1 bis 12, **dadurch gekennzeichnet, dass** es ein weiteres Langsamlager (4) mit wenigstens einem dritten Förderbereich (13) umfasst, der an wenigstens einer Seite von weiteren Langsamplätzen (11, 11') begrenzt ist und in dem eine dritte automatische Fördervorrichtung (12) mit einer weiteren durchschnittlichen Langsamzugriffszeit (T_{LL}) auf die weiteren Langsamlagerplätze (11, 11') beweglich angeordnet ist, wobei wenigstens ein weiterer Hybridlagerplatz (15, 15') sowohl weiterer Langsamlagerplatz (11, 11') als auch Langsamlagerplatz (8, 8') ist und die weitere durchschnittliche Langsamzugriffszeit (T_{LL}) größer ist als die durchschnittliche Langsamzugriffszeit (T_{L}) ist.

14. Verfahren zur Lagerführung eines Lagers (1, 1'), insbesondere eines Kommissionslagers mit Lagerplätzen (5, 5', 8, 8', 11, 11', 15, 15') für auf Lagergutträgern (23, 23') angeordnetes Lagergut (35),
wobei das Lagergut (35) an einer an wenigstens einen Lagerplatz (8, 8', 11, 11') angrenzenden und/oder in diesen integrierten Beschickungs- und/oder Entnahmestation (17, 17') eines Langsamlagers (3, 4') auf Langsamlagerplätzen (8, 8', 11, 11') des Langsamlagers (3, 4) eingelagert wird,
wobei das Lagergut (35) durch eine erste Fördervorrichtung (9, 12) von wenigstens einem der Langsamlagerplätze (8, 8', 11, 11') automatisch entnommen, auf einen Hybridlagerplatz 15, 15'), der sowohl Schnelllagerplatz (5, 5') eines Schnelllagers (2) als auch Langsamlagerplatz (8, 8', 11, 11') ist, überführt und an einer an wenigstens einen Lagerplatz (5, 5', 15, 15') angrenzenden und/oder in diesen integrierten Beschickungs- und/oder Entnahmestation (17,17') des Schnelllagers (2) entnommen wird, und
wobei das Schnelllager (2) zur bedarfsgerechten schnellen Abholung des Lagergutes (35) mit einer größeren Umschlagsgeschwindigkeit als das Langsamlager (3) betrieben wird.

## Claims

1. Warehouse (1, 1'), in particular a picking and packing warehouse with storage places (5, 5', 8, 8', 11, 11', 15, 15'), for storage goods carriers (23, 23') holding stored goods (35), with a quick storage (2) for demand-actuated quick collection of stored goods (35), wherein the quick storage (2) comprises at least a first conveyer area (7), which is bounded on at least one side by quick storage places (5, 5') and in which a first automatic conveying device (6) with an average quick access time (T_{S}) to the quick storage places (5, 5') is arranged in a mobile fashion, and with a slow storage (3), which comprises at least a second conveyer area (10), which is bounded on at least one side by slow storage places (8, 8') and in which a second automatic conveying device (9) with an average slow access time (T_{L}) to the slow storage places is arranged in a mobile fashion (8, 8'), wherein at least one hybrid storage place (15, 15') is both a quick storage place (5, 5') and a slow storage place (8, 8'), and wherein an average slow access time (T_{L}) is greater than the average quick access time (T_{S}), **characterised in that** the quick storage (2) and the slow storage location (3) are each provided with at least one loading and/or removing station (17, 17') adjacent to at least one storage place (5, 5', 8, 8', 11, 11', 15, 15') and/or integrated therein, by means of which loading and/or removing station (17, 17') the warehouse (1) can be loaded with storage goods carriers (23, 23') or the stored goods (35) can be removed from the warehouse (1, 1').

2. Warehouse (1, 1') according to claim 1, **characterised in that** the number of slow storage places (8, 8') is greater than the number of quick storage places (5, 5').

3. Warehouse (1, 1') according to claim 1 or 2, **characterised in that** at least one of the conveyer areas (7, 10, 13) is designed as a hoisting shaft bounded by storage places (5, 5', 8, 8', 11, 11', 15, 15') on at least two sides opposing each other.

4. Warehouse (1, 1') according to one of claims 1 to 3, **characterised in that** a plurality of directly adjacent hybrid storage places (15, 15') form a cohesive hybrid storage area (16).

5. Warehouse (1, 1') according to one of claims 1 to 4, **characterised in that** at least one of the automatic first and second conveying devices (6, 9) has at least one receiving level designed to receive storage goods carriers, which is mobile along a vertical direction (Y) and/or a horizontal direction (X) of the warehouse (1, 1') and comprises a plurality of storage goods carrier seatings (14) arranged side by side, each designed to receive at least one storage goods carrier (23, 23').

6. Warehouse (1, 1') according to one of claims 1 to 5, **characterised in that** a stationary transfer device (17, 17') adjoins to at least one storage place (5, 5', 8, 8', 11, 11', 15, 15') and/or is integrated therein, which transfer device (17, 17') is designed to load the at least one adjoining storage place (5, 5', 8, 8', 11, 11', 15, 15') with storage goods carriers (23, 23') and/or to remove storage goods carriers (23, 23') from there.

7. Warehouse (1, 1') according to one of claims 1 to 6, **characterised in that** a plurality of storage places (5, 5', 8, 8', 11, 11', 15, 15') arranged next to each other and/or a plurality of storage goods carrier seatings (22) of the loading and/or removing station (17, 17'), of the transfer device (18, 18') and/or of the conveying device (6, 9, 12) are equipped with at least one transferring organ (46) which has at least one transferring element (47) which is designed to interact with at least one storage goods carrier (23, 23') and to move the at least one storage goods carrier (23, 23') at least in a transverse direction (Z) across the warehouse (1, 1').

8. Warehouse (1, 1') according to claim 7, **characterised in that** the transferring organs (46) are controllable independently of one another.

9. Warehouse (1, 1') according to one of claims 1 to 8, **characterised in that** a storage compartment (60) comprising a plurality of adjacent storage places (5, 5', 8, 8', 11, 11', 15, 15') is arranged between vertical supporting posts (26) of the warehouse (1, 1'), which support the storage places (5, 5', 8, 8', 11, 11', 15, 15') arranged above the storage compartment (60).

10. Warehouse (1, 1') according to claim 9, **characterised in that** at least one horizontal partitioning element (61) running along the transverse direction (Z) of the warehouse (1, 1') is arranged at least partially between at least two storage places (5, 5', 8, 8', 11, 11', 15, 15') of a storage compartment (60), which partitioning element separates the at least two storage places (5, 5', 8, 8', 11, 11', 15, 15') from one another in the horizontal direction (X) and guides the storage goods carriers (23, 23') in the transverse direction (Z).

11. Warehouse (1, 1') according to claim 10, **characterised in that** the at least one partitioning element (61) has a vertical limiting element (62) overlapping with the storage place (5, 5', 8, 8', 11, 11', 15, 15') in a projection in the vertical direction (Y) which vertical limiting element (62) limits movements of the storage goods carriers (23, 23') in the vertical direction (Y).

12. Warehouse (1, 1') according to one of claims 5 to 11, **characterised in that** the number of storage product carrier seatings (14) in the loading and/or removing station (17, 17'), the conveying device (6, 9, 12) and/or the transferring device (18, 18') is equal to the number of storage places (5, 5', 8, 8', 11, 11', 15, 15') in one storage compartment (60).

13. Warehouse (1, 1') according to one of claims 1 to 12, **characterised in that** it comprises a further slow storage (4) with at least one third conveyer area (13) which is bordered on at least one side by further slow storage places (11, 11') and in which a third automatic conveying device (12) is arranged moveable with a further average slow access time (T_{LL}) to the further slow storage places (11, 11'), wherein at least one further hybrid storage place (15, 15') is both a further slow storage place (11, 11') and a slow storage place (8, 8'), and the further average slow access time (T_{LL}) is greater than the average slow access time (T_{L}).

14. Method for stock management of a warehouse (1, 1'), in particular of a picking and packing warehouse with storage places (5, 5', 8, 8', 11, 11', 15, 15') for stored goods (35) arranged on storage product carriers (22, 23'),
wherein the stored goods (35) are loaded at a loading and/or removing station (17, 17') of a slow storage (3, 4') adjacent to at least one storage place (8, 8', 11, 11') and/or integrated therein on slow storage places (8, 8', 11, 11') of the slow storage (3, 4), wherein the stored goods (35) are automatically removed by a first conveying device (9, 12) from at least one of the slow storage places (8, 8', 11, 11'), transferred onto a hybrid storage place (15, 15') which is both a fast storage place (5, 5') of a fast storage (2) and a slow storage place (8, 8', 11, 11'), and removed at a loading and/or removing station (17, 17') of the fast storage (2) which is adjacent to at least one storage place (5, 5', 15, 15') and/or integrated therein, and
wherein the quick storage (2) for a demand-actuated fast collection of the stored goods (35) is operated with a greater turnover rate than the slow storage (3).

## Revendications

1. Magasin de stockage (1, 1'), notamment magasin de stockage pour la préparation de commandes, comportant des emplacements de stockage (5, 5', 8, 8', 11, 11', 15, 15') pour des supports de marchandises à stocker (23, 23'), qui accueillent des marchandises à stocker (35), le magasin de stockage
comprenant un magasin de stockage rapide (2) pour le prélèvement ou la collecte rapide de la marchandise à stocker (35), conformément aux besoins,
le magasin de stockage rapide (2) possédant au moins une première zone de transport (7), qui est délimitée, sur au moins un côté, par des emplacements de stockage rapide (5, 5'), et dans laquelle est agencé un premier dispositif de transport automatique (6) mobile avec un temps d'accès rapide moyen (T_{S}) aux emplacements de stockage rapide (5, 5'), et
comprenant un magasin de stockage lent (3) possédant une deuxième zone de transport (10), qui est délimitée, sur au moins un côté, par des emplacements de stockage lent (8, 8'), et dans laquelle est agencé un deuxième dispositif de transport automatique (9) mobile avec un temps d'accès lent moyen (T_{L}) aux emplacements de stockage lent (8, 8'),
au moins un emplacement de stockage hybride (15, 15') étant aussi bien emplacement de stockage rapide (5, 5') qu'emplacement de stockage lent (8, 8'), et un temps d'accès lent moyen (T_{L}) étant supérieur au temps d'accès rapide moyen (T_{S}),
**caractérisé en ce que** le magasin de stockage rapide (2) et le magasin de stockage lent (3) sont pourvus chacun d'au moins un poste de chargement et/ou de prélèvement (17, 17') voisin d'au moins un emplacement de stockage (5, 5', 8, 8', 11, 11', 15, 15') et/ou intégré dans celui-ci, et par l'intermédiaire duquel le magasin de stockage (1) peut être alimenté et chargé en supports de marchandise à stocker (23, 23'), ou par l'intermédiaire duquel de la marchandise à stocker (35) peut être prélevée du magasin de stockage (1, 1').

2. Magasin de stockage (1, 1') selon la revendication 1, **caractérisé en ce que** le nombre des emplacements de stockage lent (8, 8') est supérieur au nombre des emplacements de stockage rapide (5, 5').

3. Magasin de stockage (1, 1') selon la revendication 1 ou la revendication 2, **caractérisé en ce que** l'une au moins des zones de transport (7, 10, 13) est configurée en tant que puits de transport délimité sur au moins deux côtés opposés, par des emplacements de stockage (5, 5', 8, 8', 11, 11', 15, 15').

4. Magasin de stockage (1, 1') selon l'une des revendications 1 à 3, **caractérisé en ce qu'**une pluralité d'emplacements de stockage hybrides (15, 15') directement voisins, forment une zone de magasin de stockage hybride (16) continue.

5. Magasin de stockage (1, 1') selon l'une des revendications 1 à 4, **caractérisé en ce que** l'un au moins des premier et deuxième dispositifs de transport automatiques (6, 9) présente au moins un plan d'accueil conçu pour accueillir des supports de marchandises à stocker, qui peut être déplacé le long d'une direction verticale (Y) et/ou d'une direction horizontale (X) du magasin de stockage (1, 1'), et comprend un certain nombre de logements d'accueil de supports de marchandises à stocker (14) agencés côte à côte et destinés à accueillir respectivement au moins un support de marchandises à stocker (23, 23').

6. Magasin de stockage (1, 1') selon l'une des revendications 1 à 5, **caractérisé en ce qu'**un dispositif de transfert stationnaire (17, 17') est voisin d'au moins un emplacement de stockage (5, 5', 8, 8', 11, 11', 15, 15') et/ou est intégré à celui-ci, et est conçu pour alimenter et charger ledit au moins un emplacement de stockage (5, 5', 8, 8', 11, 11', 15, 15') voisin, avec des supports de marchandises à stocker (23, 23'), et/ou pour prélever des supports de marchandises à stocker (23, 23') de celui-ci.

7. Magasin de stockage (1, 1') selon l'une des revendications 1 à 6, **caractérisé en ce qu'**un certain nombre d'emplacements de stockage (5, 5', 8, 8', 11, 11', 15, 15') agencés côte à côte et /ou un certain nombre de logements d'accueil de supports de marchandises à stocker (22) du poste de chargement et/ou de prélèvement (17, 17'), du dispositif de transfert (18, 18') et/ou du dispositif de transport (6, 9, 12), est ou respectivement sont équipé(s) d'au moins un organe de transfert (46) présentant au moins un élément de transfert (47), qui est conçu pour coopérer avec au moins un support de marchandises à stocker (23, 23') et pour déplacer celui-ci dans au moins une direction transversale (Z) du magasin de stockage (1, 1').

8. Magasin de stockage (1, 1') selon la revendication 7, **caractérisé en ce que** les organes de transfert (46) peuvent être commandés indépendamment les uns des autres.

9. Magasin de stockage (1, 1') selon l'une des revendications 1 à 8, **caractérisé en ce qu'**un compartiment de magasin de stockage (60) comprenant un certain nombre d'emplacements de stockage (5, 5', 8, 8', 11, 11', 15, 15') placés côte à côte, est agencé entre des montants de support verticaux (26) du magasin de stockage (1, 1'), qui supportent des emplacement de stockage (5, 5', 8, 8', 11, 11', 15, 15') agencés au-dessus du compartiment de magasin de stockage (60).

10. Magasin de stockage (1, 1') selon la revendication 9, **caractérisé en ce qu'**au moins par secteurs, entre au moins deux emplacements de stockage (5, 5', 8, 8', 11, 11', 15, 15') d'un compartiment de magasin de stockage (60), est agencé au moins un élément de subdivision horizontal (61) s'étendant le long de la direction transversale (Z) du magasin de stockage (1, 1'), et qui délimite réciproquement lesdits au moins deux emplacements de stockage (5, 5', 8, 8', 11, 11', 15, 15') dans la direction horizontale (X) et guide les supports de marchandises à stocker (23, 23') dans la direction transversale (Z).

11. Magasin de stockage (1, 1') selon la revendication 10, **caractérisé en ce que** ledit au moins un élément de subdivision (61) présente un élément de délimitation vertical (62) qui, dans une projection dans la direction verticale (Y), chevauche l'emplacement de stockage (5, 5', 8, 8', 11, 11', 15, 15'), et limite des mouvements des supports de marchandises à stocker (23, 23') dans la direction verticale (Y).

12. Magasin de stockage (1, 1') selon l'une des revendications 5 à 11, **caractérisé en ce que** le nombre de logements d'accueil de supports de marchandises à stocker (14) du poste de chargement et/ou de prélèvement (17, 17'), du dispositif de transport (6, 9, 12) et/ou du dispositif de transfert (18, 18'), est égal au nombre des emplacements de stockage (5, 5', 8, 8', 11, 11', 15, 15') dans un compartiment de magasin de stockage (60).

13. Magasin de stockage (1, 1') selon l'une des revendications 1 à 12, **caractérisé en ce qu'**il comprend un autre magasin de stockage lent (4) comportant au moins une troisième zone de transport (13), qui est délimitée, sur au moins un côté, par d'autres emplacements de stockage lent (11, 11'), et dans laquelle est agencé un troisième dispositif de transport automatique (12) mobile avec un autre temps d'accès lent moyen (T_{LL}) auxdits autres emplacements de stockage lent (11, 11'), au moins un autre emplacement de stockage hybride (15, 15') faisant office aussi bien d'autre emplacement de stockage lent (11, 11') que d'emplacement de stockage lent (8, 8'), et ledit autre temps d'accès lent moyen (T_{LL}) étant supérieur au temps d'accès lent moyen (T_{L}).

14. Procédé de gestion de magasin d'un magasin de stockage (1, 1'), notamment d'un magasin de stockage pour la préparation de commandes, comportant des emplacements de stockage (5, 5', 8, 8', 11, 11', 15, 15') pour des marchandises à stocker (35) disposées sur des supports de marchandises à stocker (23, 23'), procédé
d'après lequel la marchandise à stocker (35) est emmagasinée, au niveau d'un poste de chargement et/ou de prélèvement (17, 17') voisin d'au moins un emplacement de stockage (8, 8', 11, 11') et/ou intégré dans celui-ci, d'un magasin de stockage lent (3, 4), dans des emplacements de stockage lent (8, 8', 11, 11') du magasin de stockage lent (3, 4),
d'après lequel la marchandise à stocker (35) est prélevée automatiquement d'au moins l'un des emplacements de stockage lent (8, 8', 11, 11'), par un premier dispositif de transport (9, 12), est transférée à un emplacement de stockage hybride (15, 15'), qui est aussi bien emplacement de stockage rapide (5, 5') d'un magasin de stockage rapide (2), qu'emplacement de stockage lent (8, 8', 11, 11'), et est prélevée à un poste de chargement et/ou de prélèvement (17, 17'), qui est voisin d'au moins un emplacement de stockage (5, 5', 15, 15') et/ou est intégré dans celui-ci, et fait partie du magasin de stockage rapide (2), et
d'après lequel on fait fonctionner le magasin de stockage rapide (2) avec une vitesse de transbordement plus grande que le magasin de stockage lent (3), en vue du prélèvement ou la collecte rapide de la marchandise à stocker (35), conformément aux besoins.
